(19)

**Europäisches Patentamt**
**European Patent Office**
**Office européen des brevets**

(11) **EP 4 058 236 B1**

(12) # EUROPÄISCHE PATENTSCHRIFT

(45) Veröffentlichungstag und Bekanntmachung des Hinweises auf die Patenterteilung:
**04.12.2024 Patentblatt 2024/49**

(21) Anmeldenummer: **20792652.8**

(22) Anmeldetag: **16.10.2020**

(51) Internationale Patentklassifikation (IPC):
***B23Q 17/09*** *(2006.01)*

(52) Gemeinsame Patentklassifikation (CPC):
**B23Q 17/0966;** B23Q 2039/006

(86) Internationale Anmeldenummer:
**PCT/EP2020/079234**

(87) Internationale Veröffentlichungsnummer:
**WO 2021/094055 (20.05.2021 Gazette 2021/20)**

(54) **ZERSPANUNGSMASCHINE MIT EINEM KRAFTAUFNEHMER, VERFAHREN ZUM BETRIEB EINER SOLCHEN ZERSPANUNGSMASCHINE SOWIE VERFAHREN ZUM KALIBRIEREN DES KRAFTAUFNEHMERS EINER SOLCHEN ZERSPANUNGSMASCHINE**

CUTTING MACHINE WITH A FORCE SENSOR, METHOD FOR OPERATING SUCH A CUTTING MACHINE AND METHOD FOR CALIBRATING THE FORCE SENSOR OF SUCH A CUTTING MACHINE

MACHINE D'ENLÈVEMENT DE COPEAUX POURVU D'UN CAPTEUR DE FORCE, PROCÉDÉ DE FONCTIONNEMENT D'UNE TELLE MACHINE D'ENLÈVEMENT DE COPEAUX AINSI QUE PROCÉDÉ D'ÉTALONNAGE DU CAPTEUR DE FORCE D'UNE TELLE MACHINE D'ENLÈVEMENT DE COPEAUX

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **12.11.2019 EP 19208608**

(43) Veröffentlichungstag der Anmeldung:
**21.09.2022 Patentblatt 2022/38**

(73) Patentinhaber: **Kistler Holding AG**
**8408 Winterthur (CH)**

(72) Erfinder:
• **FIMPEL, Tobias**
**8272 Ermatingen (CH)**
• **KEITZEL, Gunnar**
**8408 Winterthur (CH)**

(56) Entgegenhaltungen:
**EP-A1- 0 444 657 JP-A- S60 172 446**

**Beschreibung**

**Technisches Gebiet**

Die Erfindung betrifft eine Zerspanungsmaschine mit einem Kraftaufnehmer nach dem Oberbegriff des unabhängigen Anspruchs. Die Erfindung betrifft auch ein Verfahren zum Betrieb einer solchen Zerspanungsmaschine. Und die Erfindung betrifft ein Verfahren zum Kalibrieren des Kraftaufnehmers einer solchen Zerspanungsmaschine.

**Stand der Technik**

Zerspanungsmaschinen sind bekannt. Bekannte Zerspanungsmaschinen sind Drehmaschinen, Fräsmaschinen, Sägemaschinen, usw. Mit Zerspanungsmaschinen erfolgt eine spanende Formgebung eines Werkstücks, indem ein Werkzeug mit einem Schneidkeil Werkstoff des Werkstücks abträgt. Dabei übt der Schneidkeil eine Werkzeugkraft aus. Das Werkstück ist aus beliebigem Werkstoff wie Metall, Holz, Kunststoff, usw. Der Schneidkeil ist aus hartem, festem und zähem Schneidstoff wie Metall, Keramik, usw. Bekannte Werkzeuge zur spanenden Formgebung sind Meissel, Drehmeissel, Fräser, Plansenker, Sägeblätter, usw.

Bei der spanenden Formgebung bewegen sich Werkstück und Werkzeug gegeneinander. Sowohl das Werkstück als auch das Werkzeug werden dabei geradlinig oder kreisförmig bewegt. Die Zerspanungsmaschine weist dazu mehrere Antriebseinheiten wie elektrische Antriebseinheiten, pneumatische Antriebseinheiten, usw. auf.

Für eine kostengünstige und qualitativ konstante Fertigung eines Werkstücks ist es wünschenswert, die Werkzeugkraft zu messen, denn die Werkzeugkraft sowie die bei der spanenden Formgebung auftretenden erhöhten Temperaturen haben einen Verschleiss des Schneidkeils zur Folge. Der Verschleiss verändert die Schneidengeometrie des Schneidkeils. Und ein verschlissener Schneidkeil benötigt für die spanende Formgebung des Werkstücks eine grösser Werkzeugkraft, was sich in einem höheren Energieverbrauch der Zerspanungsmaschine äussert und was zudem eine Oberflächengüte und eine Masshaltigkeit des Werkstücks erniedrigt.

EP0433535A1 offenbart eine Anordnung mit einem Mehrkomponenten-Kraftaufnehmer zum Messen der Werkzeugkraft bei der spanenden Formgebung eines Werkstücks in einer Zerspanungsmaschine. Der Mehrkomponenten-Kraftaufnehmer ist kraftschlüssig in einer Aussparung eines Maschinenteils eingespannt.

Nachteilig an der Anordnung der EP0433535A1 ist, dass die Werkzeugkraft nicht dort gemessen werden, wo sie wirkt, also am Schneidkeil, sondern entfernt vom Schneidkeil, nämlich in einem Maschinenteil. Und dort wird die Werkzeugkraft indirekt als im Maschinenteil auftretende mechanische Spannung gemessen. Die mechanische Spannung wiederum wird durch Abmessungen und Masse des Maschinenteils beeinflusst. Darüber hinaus ist der Mehrkomponenten-Kraftaufnehmer im Maschinenteil im Kraftnebenschluss angeordnet. Im Kraftnebenschluss wird jedoch nur ein kleiner Teil der dort auftretenden mechanischen Spannung gemessen. All dies führt zu einem wenig genauen Messen der Werkzeugkraft. Eine Genauigkeit beim Messen der Werkzeugkraft gibt eine Abweichung der gemessenen Werkzeugkraft von der tatsächlichen Werkzeugkraft an, je genauer die Werkzeugkraft gemessen wird, desto geringer ist die Abweichung der gemessenen Werkzeugkraft von der tatsächlichen Werkzeugkraft.

Nun erfolgt die spanende Formgebung eines Werkstücks in der Regel in einer zeitlichen Abfolge von Fertigungsschritten mit mehreren benötigten Werkzeugen. Die Werkzeuge werden also öfters gewechselt. In jedem neuen Fertigungsschritt wird ein neues Werkzeug am Werkstück ausgerichtet und Werkzeug und Werkstück werden gegeneinander bewegt. Für einen raschen und kostengünstigen Werkzeugwechsel und eine rasche und ebenso kostengünstige Werkzeugausrichtung weist die Zerspanungsmaschine deshalb eine Werkzeughalterung auf. Die Werkzeughalterung hält die für die Fertigungsschritte benötigten Werkzeuge. Um auf ein neues Werkzeug zu wechseln und um das neue Werkzeug am Werkstück auszurichten, wird dann die Werkzeughalterung bewegt. Dazu ist die Werkzeughalterung an einem Werkzeugarm befestigt. Es ist also der Werkzeugarm, der von einer Antriebseinheit bewegt wird, um ein für einen Fertigungsschritt benötigtes Werkzeug der Werkzeughalterung am Werkstück auszurichten und um dann Werkzeug und Werkstück gegeneinander zu bewegen.

EP0444657A1 zeigt einen Schleifroboter mit einem Sechskomponenten-Kraftaufnehmer zum Messen der beim Schleifen eines Werkstücks aufgebrachten Werkzeugkraft. Der Schleifroboter verfügt über einen in mehreren Dimensionen beweglichen Arm. Der Arm wird über Servomotoren bewegt. Am Ende des Arms ist ein Schleifer angeordnet. Der Schleifer verfügt über einen eigenen Antrieb zum Schleifen des Werkstücks. Der Sechskomponenten-Kraftaufnehmer befindet sich zwischen dem Ende des Arms und dem Schleifer.

JPS60172446A1 offenbart ebenfalls einen Roboter zur spanenden Bearbeitung eines Werkstücks. Dazu verwendet der Roboter ein an einem Ende eines beweglichen Arm befestigtes Werkzeug. Um einen Anpressdruck des Werkzeugs am Werkstück zu messen, ist zwischen dem Ende des Arms und dem Werkzeug ein Dehnungsmessstreifen angeordnet.

Eine erste Aufgabe der vorliegenden Erfindung ist es, die Werkzeugkraft, die bei der spanenden Formgebung eines Werkstücks in einer Zerspanungsmaschine wirkt, mit einem Kraftaufnehmer genau zu messen. Insbesondere soll diese Aufgabe für eine Zerspanungsmaschine mit einer Werkzeughalterung, die von einer Antriebseinheit über eine Werkzeugarm bewegt wird, gelöst werden. Eine zweite Aufgabe der Erfindung besteht darin, zum Messen der bei der spanenden Formgebung eines Werkstücks wirkenden Werkzeugkraft einen Kraftaufnehmer platzsparend in der Zerspanungsmaschine anzuordnen. Und als dritte Aufgabe soll die Erfindung, die bei der spanenden Formgebung eines Werkstücks wirkende Werkzeugkraft mit einem Kraftaufnehmer kostengünstig messen.

## Darstellung der Erfindung

Zumindest eine dieser Aufgaben wird durch die Merkmale des unabhängigen Anspruchs gelöst.

Die Erfindung betrifft eine Zerspanungsmaschine nach Anspruch 1.

Die Erfindung beruht auf der Feststellung, dass für ein präzises Ausrichten der benötigten Werkzeuge am Werkstück und für ein präzises Bewegen der benötigten Werkzeuge gegenüber dem Werkstück, die benötigten Werkzeuge von der Werkzeughalterung inelastisch gehalten werden und die Werkzeughalterung am Werkzeugarm inelastisch befestigt ist. Die Erfinder haben nun erkannt, dass die inelastischen mechanischen Übergänge von den benötigten Werkzeugen über die Werkzeughalterung zum Werkzeugarm auch einen weitgehend ungedämpften Kraftfluss der Werkzeugkraft von einem der benötigten Werkzeuge in den Werkzeugarm ermöglicht. Denn jede elastische Deformation dämpft den Kraftfluss der Werkzeugkraft und verfälscht das Messen der Werkzeugkraft. Erkanntermassen ermöglicht die Anordnung des Kraftaufnehmers im Krafthauptschluss räumlich zwischen einem Oberarm und einem Unterarm ein genaues Messen der Werkzeugkraft. Der Kraftaufnehmer befindet sich im Inneren eines zweigeteilten Werkzeugarms, was platzsparend und auch kostengünstig ist, denn vorgegebene äussere Abmessungen eines herkömmlichen Werkzeugarms werden so beibehalten, und eine herkömmliche Zerspanungsmaschine muss somit nicht geändert werden. Lediglich der herkömmliche Werkzeugarm wird durch einen erfindungsgemässen Werkzeugarm ersetzt.

Weitere vorteilhafte Lösungen der Aufgabe erfolgen mit in den Merkmalen der abhängigen Ansprüche.

## Kurze Beschreibung der Zeichnungen

Im Folgenden wird die Erfindung beispielhaft anhand von Zeichnungen erläutert. Dabei zeigt

Fig. 1    schematisch Teile einer ersten Ausführungsform einer Zerspanungsmaschine mit einem Kraftaufnehmer;

Fig. 2    in Explosionsdarstellung Teile einer zweiten Ausführungsform einer Zerspanungsmaschine mit zwei Kraftaufnehmern;

Fig. 3    ein Flussdiagramm mit Verfahrensschritten zum Kalibrieren des mindestens einen Kraftaufnehmers der Zerspanungsmaschine gemäss Fig. 1 oder 2; und

Fig. 4    schematisch Teile einer Ausführungsform einer Kalibriervorrichtung zur Durchführung der Verfahrensschritte gemäss Fig. 3 mit der zweiten Ausführungsform der Zerspanungsmaschine mit zwei Kraftaufnehmern gemäss Fig. 2.

Grundsätzlich sind in den Zeichnungen gleiche Teile mit gleichen Bezugszeichen versehen.

## Wege zur Ausführung der Erfindung

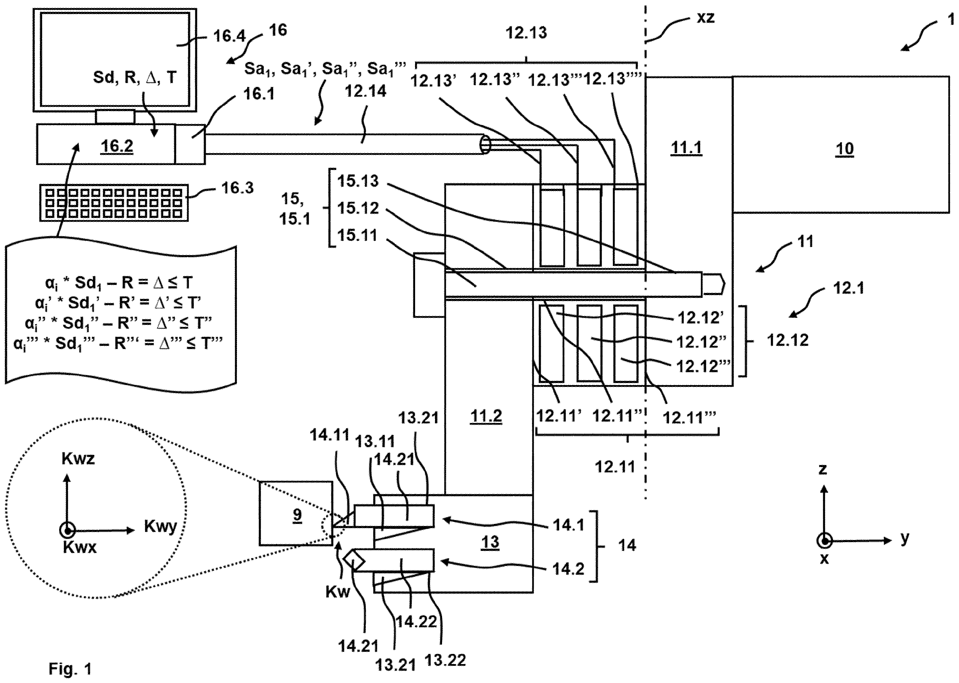

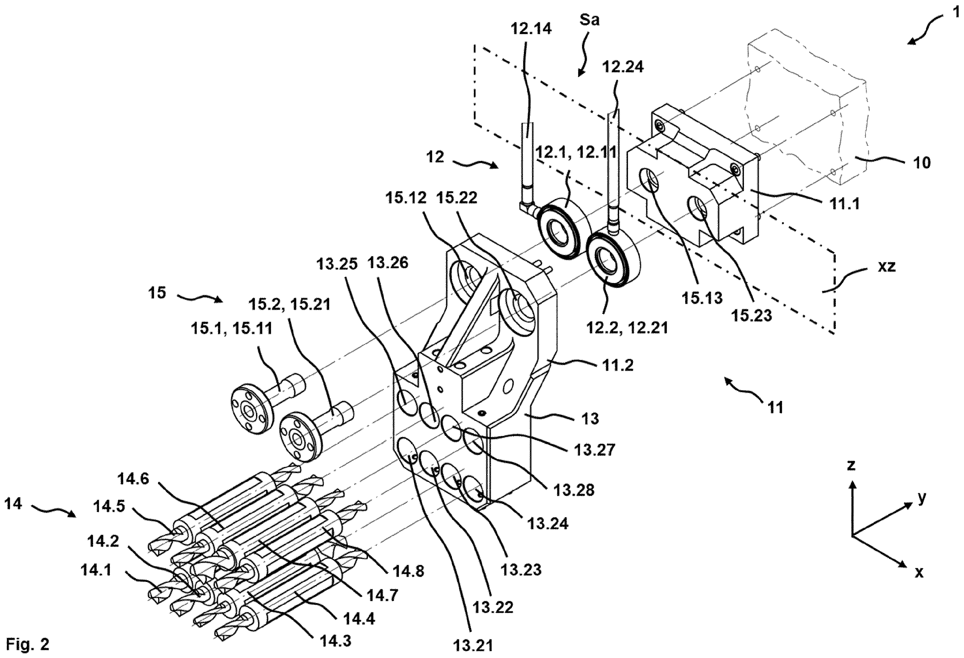

Fig. 1 und 2 zeigen Teile von zwei Ausführungsformen einer Zerspanungsmaschine 1 zur spanenden Formgebung eines Werkstücks 9. Die Zerspanungsmaschine 1 weist eine Antriebseinheit 10, einen Maschinenarm 11, mindestens einen Kraftaufnehmer 12.1, 12.2, eine Werkzeughalterung 13 und mehrere benötigte Werkzeuge 14 auf. Die Zerspanungsmaschine 1 ist in einem orthogonalen Koordinatensystem mit drei Achsen x, y, z angeordnet, die drei Achsen werden auch als Querachse x, Horizontalachse y und Vertikalachse z bezeichnet.

Das Werkstück 9 ist aus beliebigem Werkstoff wie Metall, Holz, Kunststoff, usw. Die spanende Formgebung des Werkstücks 9 erfolgt in einer zeitlichen Abfolge von Verarbeitungsschritten mit mehreren benötigten Werkzeugen 14. In der ersten Ausführungsform der Zerspanungsmaschine 1 gemäss Fig. 1 werden in zwei Verarbeitungsschritten zwei Werkzeuge 14.1, 14.2 benötigt. In einem ersten Fertigungsschritt wird ein erstes Werkzeug 14.1 benötigt, in einem zweiten Fertigungsschritt wird ein zweites Werkzeug 14.2 benötigt. Natürlich kann der Fachmann die Erfindung auch für eine spanende Formgebung eines Werkstücks mit mehr als zwei Werkzeugen verwenden. So werden in der der zweiten Ausführungsform der Zerspanungsmaschine 1 gemäss Fig. 2 in acht Verarbeitungsschritten acht Werkzeuge 14.1 - 14.8 benötigt.

Bei der spanenden Formgebung des Werkstücks 9 führen die benötigten Werkzeuge 14 eine Schnittbewegung in einer von der Querachse x und der Vertikalachse z aufgespannten Querebene xy aus. Und die benötigten Werkzeuge 14 führen bei der spanenden Formgebung des Werkstücks 9 eine Vorschubbewegung entlang der Horizontalachse y aus. Dabei üben die benötigten Werkzeuge 14 eine Werkzeugkraft Kw auf das Werkstück 9 aus. Die Werkzeugkraft Kw weist drei Kraftkomponenten Kwx, Kwy, Kwz auf. Aufgrund der Schnittbewegung weist die Werkzeugkraft Kw eine Querschubkomponente Kwx in Richtung der Querachse x und eine Vertikalschubkomponente Kwz in Richtung der Vertikalachse z auf. Und aufgrund der Vorschubbewegung weist die Werkzeugkraft Kw eine Horizontalkraftkomponente Kwy in Richtung der Horizontalachse y auf.

Die Werkzeughalterung 13 hält die für die Fertigungsschritte benötigten Werkzeuge 14. Die Werkzeughalterung 13 ist aus mechanisch beständigem Material wie Stahl, Werkzeugstahl, usw. In der ersten Ausführungsform der Zerspanungsmaschine 1 gemäss Fig. 1 hält die Werkzeughalterung 13 zwei benötigte Werkzeuge 14.1, 14.2. In der zweiten Ausführungsform der Zerspanungsmaschine 1 gemäss Fig. 2 hält die Werkzeughalterung 13 acht benötigte Werkzeuge 14.1 - 14.8.

Wie in der ersten Ausführungsform der Zerspanungsmaschine 1 gemäss Fig. 1 dargestellt, weist jedes benötigte Werkzeug 14.1, 14.2 mindestens einen Schneidkeil 14.11, 14.12 und einen Schaft 14.21, 14.22 auf. Der Schneidkeil 14.11, 14.12 ist aus hartem, festem und zähem Schneidstoff wie Metall, Keramik, usw. Ein erstes benötigtes Werkzeug 14.1 weist einen dreieckigen Schneidkeil 14.11 auf, ein zweites benötigtes Werkzeug 14.2 weist einen rechteckigen Schneidkeil 14.21 auf. In der zweiten Ausführungsform der Zerspanungsmaschine 1 gemäss Fig. 2 weist jedes benötigte Werkzeug 14.1 - 14.8 zwei Schneidkeile und einen Schaft auf, Die Schneidkeile befinden sich an entgegengesetzten Enden des Schafts.

Die Werkzeughalterung 13 ist aus Material mit hohem Elastizitätsmodul grösser 200GPa. Dies ist im Unterschied zu einem herkömmlichen Werkzeughalterung aus Gusseisen mit einem normalen Elastizitätsmodul von 110GPa. Aufgrund des hohen Elastizitätsmoduls überträgt die Werkzeughalterung 13 die Werkzeugkraft Kw um einen Faktor zwei inelastischer als die herkömmliche Werkzeughalterung.

Die benötigten Werkzeuge 14 werden über ihren Schaft in der Werkzeughalterung 13 gehalten. Dazu weist die Werkzeughalterung 13 mehrere Haltemittel und mehrere Aussparungen auf.

In der ersten Ausführungsform der Zerspanungsmaschine 1 gemäss Fig. 1 nimmt eine erste Aussparung 13.21 den ersten Schaft 14.21 und ein erstes Haltemittel 13.11 auf. Eine zweite Aussparung 13.22 nimmt den zweiten Schaft 14.22 und ein zweites Haltemittel 13.12 auf. Das erste und zweite Haltemittel 13.11, 13.12 ist keilförmig und hält den Schaft 14.21, 14.22 nach dem mechanischen Prinzip der schiefen Ebene mit einer Haltekraft in der Aussparung 13.21, 13.22. Die erste Aussparung 13.21 und die zweite Aussparung 13.22 sind bezüglich der Vertikalachse z übereinander angeordnet.

In der zweiten Ausführungsform der Zerspanungsmaschine 1 gemäss Fig. 2 nimmt jeweils eine von acht Aussparungen 13.21 - 13.28 einen Schaft eines der acht benötigten Werkzeuge 14.1 - 14.8 und ein Haltemittel auf. Die Haltemittel sind Madenschrauben und ragen in einem rechten Winkel zur Horizontalachse y in die Aussparungen 13.21 - 13.28. Jeweils eine Madenschraube presst gegen einen Schaft eines benötigten Werkzeugs 14.1 - 14.8 und hält das benötigte Werkzeuge 14.1 - 14.8 mit einer Haltekraft in der Aussparung 13.21 - 13.28.

Eine Grösse der Haltekraft der benötigten Werkzeuge 14 in der Werkzeughalterung 13 ist mindestens eine Grössenordnung grösser als eine Grösse der Werkzeugkraft Kw, so dass die Werkzeughalterung 13 die benötigten Werkzeuge 14 inelastisch hält. Im Sinne der Erfindung bedeutet das Eigenschaftswort "inelastisch", dass ein beliebiger Punkt eines benötigten Werkzeugs 14 und ein beliebiger Punkt der Werkzeughalterung 13 unabhängig von äusseren Kräften immer den gleichen Abstand zueinander besitzen.

Die Werkzeughalterung 13 ist am Werkzeugarm 11 befestigt. Der Werkzeugarm 11 ist aus mechanisch beständigem Material wie Stahl, Werkzeugstahl, usw. Der Werkzeugarm 11 weist einen Oberarm 11.1, einen Unterarm 11.2 und mindestens ein Verbindungsmittel 15 auf. Die Werkzeughalterung 13 ist am Unterarm 11.2 befestigt. Die Antriebseinheit 10 ist am Oberarm 11.1 befestigt. Die Befestigung kann über beliebige Befestigungsmittel wie eine Schraubenverbindung, eine Lötverbindung, eine Schweissverbindung, usw. erfolgen.

Eine Grösse einer Befestigungskraft der Befestigung der Werkzeughalterung 13 am Unterarm 11.2 und der Befestigung der Antriebseinheit 10 am Oberarm 11.1 ist mindestens eine Grössenordnung grösser als die Grösse der Werkzeugkraft Kw, so dass befestigt ist die Werkzeughalterung 13 inelastisch am Unterarm 11.2 befestigt ist und die Antriebseinheit 10 inelastisch am Oberarm 11.1 befestigt ist.

Der Werkzeugarm 11 ist aus Material mit hohem Elastizitätsmodul grösser 200GPa. Dies ist im Unterschied zu einem herkömmlichen Maschinenarm aus Gusseisen mit einem normalen Elastizitätsmodul von 110GPa. Ein vergleichsweise um einen Faktor zwei höheres Elastizitätsmodul macht technisch aus zwei Gründen Sinn:

-  Erstens sind die äusseren Abmessungen des Werkzeugarms 11 vorgegeben. Durch die Anordnung des Kraftaufnehmers 12.1, 12.2 im Innern des Werkzeugarms 11 weist der Werkzeugarm 11 in seinem Innern jedoch Hohlräume für den Kraftaufnehmer 12.1, 12.2 auf, der Werkzeugarm 11 selber besteht deshalb aus weniger Material. Für ein präzises Ausrichten der benötigten Werkzeuge 14 am Werkstück 9 und für ein präzises Bewegen der benötigten Werkzeuge 14 gegenüber dem Werkstück 9 muss jedoch eine minimale mechanische Stabilität des Werkzeugarms 11 erfüllt werden. Diese minimale mechanische Stabilität des Werkzeugarms 11 wird den hohen Elastizitätsmodul grösser 200GPa erfüllt. Im Sinne der Erfindung bedeuten die Ausdrücke "präzises Ausrichten" und "präzises Bewegen" eine Positionsgenauigkeit beim Ausrichten und beim Bewegen entlang der drei Achsen x, y, z von 11pm.

- Zweitens überträgt der Werkzeugarm 11 aufgrund des hohen Elastizitätsmoduls die Werkzeugkraft Kw um einen Faktor zwei inelastischer als der herkömmliche Werkzeugarm.

Der Oberarm 11.1 und der Unterarm 11.2 sind separate Einheiten. Im Sinne der Erfindung bedeutet der Ausdruck "separate Einheit", dass der Oberarm 11.1 und der Unterarm 11.2 voneinander getrennte Gegenstände sind. Vorzugsweise sind der Oberarm 11.1 und der Unterarm 11.2 in der Querebene xz mechanisch miteinander verbunden. Der Oberarm 11.1 und der Unterarm 11.2 sind über das Verbindungsmittel 15 mechanisch miteinander verbunden.

In der ersten Ausführungsform der Zerspanungsmaschine 1 gemäss Fig. 1 ist das Verbindungsmittel 15 ein erstes Verbindungsmittel 15.1 auf. Das erste Verbindungsmittel 15.1 ist eine Schraubenverbindung mit einer Einziehschraube 15.11, einer Bohrung 15.12 im Unterarm 11.2 und einem Innengewinde 15.13 im Oberarm 11.1. Die Schraubenverbindung erfolgt parallel zur Horizontalachse y. Ein Aussengewinde der Einziehschraube 15.11 reicht durch die Bohrung 15.12 zum Innengewinde 15.13. Durch Verschrauben von Aussengewinde und Innengewinde 15.13 presst ein Schraubenkopf der Einziehschraube 15.11 den Unterarm 11.2 gegen den Oberarm 11.1.

In der zweiten Ausführungsform der Zerspanungsmaschine 1 gemäss Fig. 2 besteht das Verbindungsmittel 15 aus zwei Verbindungsmitteln 15.1, 15.2. Ein erstes Verbindungsmittel 15.1 ist eine Schraubenverbindung mit einer Einziehschraube 15.11, einer Bohrung 15.12 im Unterarm 11.2 und einem Innengewinde 15.13 im Oberarm 11.1. Ein zweites Verbindungsmittel 15.2 ist eine Schraubenverbindung mit einer Einziehschraube 15.21, einer Bohrung 15.22 im Unterarm 11.2 und einem Innengewinde 15.23 im Oberarm 11.1. Die zwei Verbindungsmittel 15.1, 15.2 sind parallel zueinander in einer von der Querachse x und der Horizontalachse y aufgespannten Horizontalebene xy angeordnet. Die beiden Schraubenverbindungen erfolgen parallel zur Horizontalachse y. Ein Aussengewinde der Einziehschraube 15.11, 15.21 reicht durch die Bohrung 15.12, 15.22 zum Innengewinde 15.13, 15.23. Durch Verschrauben von Aussengewinde und Innengewinde 15.13, 15.23 presst ein Schraubenkopf der Einziehschraube 15.11, 15.21 den Unterarm 11.2 gegen den Oberarm 11.1.

Eine Grösse einer Verbindungskraft der mechanischen Verbindung von Oberarm 11.1 und Unterarm 11.2 über das Verbindungsmittel 15 ist mindestens eine Grössenordnung grösser als die Grösse der Werkzeugkraft Kw, so dass der Oberarm 11.1 inelastisch mit dem Unterarm 11.2 mechanisch verbunden ist. Natürlich kann der Fachmann bei Kenntnis der Erfindung anstatt einer Schraubenverbindung auch eine Lötverbindung, eine Schweissverbindung, usw. verwenden.

Die Antriebseinheit 10 ist eine elektrische Antriebseinheit, eine pneumatische Antriebseinheit, usw. Die Antriebseinheit 10 bewegt den Maschinenarm 11 entlang der drei Achsen x, y und z. Natürlich kann der Fachmann die Erfindung auch mit mehr als einer Antriebseinheit verwenden.

In der ersten Ausführungsform gemäss Fig. 1 weist die Zerspanungsmaschine 1 einen Kraftaufnehmer 12.1 auf. In der zweiten Ausführungsform gemäss Fig.2 weist die Zerspanungsmaschine 1 zwei Kraftaufnehmer 12.1, 12.2 auf. Der mindestens eine Kraftaufnehmer 12.1, 12.2 ist in der Verbindungsebene 11.3 räumlich zwischen dem Oberarm 11.1 und dem Unterarm 11.2 angeordnet. Bei Kenntnis der vorliegenden Erfindung steht es dem Fachmann frei, wie viele Kraftaufnehmer er zwischen dem Oberarm und dem Unterarm anordnet. Eine Verwendung von einem einzigen Kraftaufnehmer ist zum Messen der Werkzeugkraft vollkommen ausreichend. Eine Verwendung von zwei Kraftaufnehmern gestattet ein redundantes Messen der Werkzeugkraft, die zwei Kraftaufnehmer messen die Werkzeugkraft unabhängig voneinander und erzeugen für die gemessene Werkzeugkraft unabhängig voneinander Messignale, aus welchen Messignalen ein arithmetisches Mittel gebildet werden kann, was statistisch gesehen ein genaueres Messen der Werkzeugkraft ist, als mit einem einzigen Kraftaufnehmer.

In der ersten Ausführungsform der Zerspanungsmaschine 1 gemäss Fig. 1 weist ein Kraftaufnehmer 12.1 ein Gehäuse 12.11 aus mechanisch beständigem Material wie Stahl, Werkzeugstahl, usw. auf. In der zweiten Ausführungsform der Zerspanungsmaschine 1 gemäss Fig.2 weist ein erster Kraftaufnehmer 12.1 ein erstes Gehäuse 12.11 auf und ein zweiter Kraftaufnehmer 12.2 weist ein zweites Gehäuse 12.21 auf.

Im Folgenden werden Details zum Kraftaufnehmer 12.1, 12.2 anhand der ersten Ausführungsform der Zerspanungsmaschine 1 gemäss Fig. 1 erläutert. Diese Detailbeschreibung des Kraftaufnehmers 12.1 gilt auch für die zwei Kraftaufnehmer 12.1, 12.2 der zweiten Ausführungsform der Zerspanungsmaschine 1 gemäss Figur 2.

Der Kraftaufnehmer 12.1 ist hohlzylinderförmig mit zwei Gehäusestirnflächen 12.11', 12.11''' und einer Gehäusebohrung 12.11". Mit einer ersten Gehäusestirnfläche 12.11' ist der Kraftaufnehmer 12.1 im flächigen Kontakt mit dem Unterarm 11.2, mit einer zweiten Gehäusestirnfläche 12.11''' ist der Kraftaufnehmer 12.1 im flächigen Kontakt mit dem Oberarm 11.1. Die erste Gehäusestirnfläche 12.11' liegt parallel zur Querebene xz, die zweite Gehäusestirnfläche 12.11''' liegt in der Querebene xz. Eine Längsachse der Gehäusebohrung 12.11" liegt parallel zur Horizontalachse y. Ein Durchmesser der Gehäusebohrung 12.11" ist so gross bemessen, dass die Einziehschraube 15.11 hindurch ragt.

Die zu messende Werkzeugkraft Kw wirkt über die Gehäusestirnflächen 12.11', 12.11''' auf den Kraftaufnehmer 12.1. Eine Oberfläche der Gehäusestirnflächen 12.11', 12.11''' ist mindestens eine Grössenordnung grösser als eine Querschnittsfläche der Einziehschraube 15.11. Ein Anteil der vom Kraftaufnehmer 12.1 gemessenen Werkzeugkraft Kw beträgt mindestens 90%. Der Kraftaufnehmer 12.1 ist daher im Krafthauptschluss räumlich zwischen dem Oberarm 11.1 und dem Unterarm 11.2 angeordnet. Der Kraftaufnehmer 12.1 misst die Werkzeugkraft Kw somit mit sehr hoher Empfindlichkeit. Im Sinne der Erfindung ist die Empfindlichkeit ein Grössenverhältnis der vom Kraftaufnehmer 12. unter der Wirkung der Werkzeugkraft Kw erzeugten analogen Messsignale Sa und der auf den Kraftaufnehmer 12.1 wirkenden Werkzeugkraft Kw.

Der Kraftaufnehmer 12.1 ist ein piezoelektrischer Kraftaufnehmer mit piezoelektrischem Material 12.12 aus einem Einkristall wie Quarz ($SiO_2$), Calcium-Gallo-Germanat ($Ca_3Ga_2Ge_4O_{14}$ oder CGG), Langasit ($La_3Ga_5SiO_{14}$ oder LGS), Turmalin, Galliumorthophosphat, usw. und aus Piezokeramik wie Blei-Zirkonat-Titanat ($Pb[Zr_xTi_{1-x}]O_3$, $0 \leq x \leq 1$), usw.

Das piezoelektrische Material 12.12 ist hohlzylinderförmig, mit Stirnflächen die parallel zu den Gehäusestirnflächen 12.11', 12.11''' und somit parallel zur Querebene xz liegen. Die zu messende Werkzeugkraft Kw wirkt somit auf die Stirnflächen des piezoelektrischen Materials 12.12. Das piezoelektrische Material 12.12 ist so orientiert, dass es auf den Stirnflächen, auf denen die Werkzeugkraft Kw einwirkt, eine höchste Empfindlichkeit für die zu messende Werkzeugkraft Kw hat. Bei höchster Empfindlichkeit erzeugt das piezoelektrische Material 12.12 eine grösste Anzahl elektrischer Polarisationsladungen. Piezoelektrisches Material 12.12 aus einem Einkristall wird daher so orientiert in Hohlzylinder geschnitten, dass es für eine auf die Stirnflächen einwirkende Werkzeugkraft Kw eine grösste Anzahl elektrischer Polarisationsladungen erzeugt. Piezoelektrisches Material 12.12 aus Piezokeramik wird daher in einem elektrischen Feld so polarisiert und durch mechanisches Pressen in eine Hohlzylinderform gebracht, dass es für eine auf die Stirnflächen einwirkende Werkzeugkraft Kw eine grösste Anzahl elektrischer Polarisationsladungen erzeugt.

Der Kraftaufnehmer 12.1 misst die drei Werkzeugkraftkomponenten Kwx, Kwy, Kwz der Werkzeugkraft Kw. Dazu weist der Kraftaufnehmer 12.1 drei Piezoelemente 12.12', 12.12'', 12.12''' aus piezoelektrischem Material 12.12 auf. Ein erstes Piezoelement 12.12' ist so orientiert, dass es für die Schubkraftkomponente Kx in Richtung der Querachse x mit höchster Empfindlichkeit elektrische Polarisationsladungen erzeugt. Im Beispiel ist ein zweites Piezoelement 12.12'' ist so orientiert, dass es für die Schubkraftkomponente Kz in Richtung der Vertikalachse z mit höchster Empfindlichkeit elektrische Polarisationsladungen erzeugt. Und im Beispiel ist ein drittes Piezoelement 12.12''' so orientiert, dass es für die Normalkraftkomponente Ky in Richtung der Horizontalachse y mit höchster Empfindlichkeit elektrische Polarisationsladungen erzeugt.

Die elektrischen Polarisationsladungen müssen von den Stirnflächen abgenommen werden. Der Kraftaufnehmer 12.1 weist dazu Elektroden 12.13 auf. Die Elektroden 12.13 sind aus elektrisch leitfähigem Material 12.3 wie Kupfer, Gold, usw. und hohlzylinderförmig. Je eine Elektrode 12.13 ist direkt auf einer der Stirnflächen der Piezoelemente 12.12', 12.12'', 12.12''' angeordnet. Der Kraftaufnehmer 12.1 weist somit insgesamt sechs Elektroden 12.13 auf. Drei Signalelektroden 12.13', 12.13'', 12.13''' nehmen elektrische Polarisationsladungen als analoge Messsignale Sa von ersten Stirnflächen ab, drei Masseelektroden 12.13'''' nehmen elektrische Polarisationsladungen von zweiten Stirnflächen ab. Die analogen Messsignale Sa sind proportional zur Grösse der Werkzeugkraft Kw. Die drei Signalelektroden 12.13', 12.13'', 12.13''' sind gegenüber dem Gehäuse 12.11 elektrisch isoliert und die drei Masseelektroden 12.13'''' sind elektrisch mit dem Gehäuse 12.11 verbunden und liegen auf dem elektrischen Massepotenzial des Gehäuses 12.11. Weil die Masseelektroden 12.13'''' alle auf dem gleichen elektrischen Massepotenzial liegen, haben sie das gleiche Bezugszeichen. Die drei Signalelektroden 12.13', 12.13'', 12.13''' sind elektrisch mit einem Signalkabel 12.14 verbunden. Das Signalkabel 12.14 leitet die analogen Messsignale Sa von den Signalelektroden 12.13', 12.13'', 12.13''' zu einer Auswerteeinheit 16 ab.

Für jeden Fertigungsschritt mit einem benötigten Werkzeug 14 erzeugt der Kraftaufnehmer 12.1 analoge Messsignale $Sa_1$. Die analogen Messsignale Sa umfassen analoge Querschubsignale $Sa_1$' für eine Querschubkomponente Kwx in Richtung der Querachse x, analoge Vertikalschubsignale $Sa_1$'' für eine Vertikalschubkomponente Kwz in Richtung der Vertikalachse z und analoge Horizontalkraftsignale $Sa_1$''' für eine Horizontalkraftkomponente Kwy in Richtung der Horizontalachse y. Jeder Fertigungsschritt dauert 1sec bis 100sec. Der Kraftaufnehmer 12.1 erzeugt die analogen Messsignale $Sa_1$ mit einer zeitlichen Auflösung in einem Frequenzbereich von 1kHz bis 50kHz.

Damit die Elektroden 12.13 alle erzeugten elektrischen Polarisationsladungen von den Stirnflächen der Piezoelemente 12.12', 12.12'', 12.12''' abnehmen, und keine elektrische Polarisationsladungen auf den Stirnflächen der Piezoelemente 12.12', 12.12'', 12.12''' verbleiben und das Messen der Werkzeugkraft Kw verfälschen, werden die Elektroden 12.13 mechanisch gegen die Stirnflächen der Piezoelemente 12.12', 12.12'', 12.12''' vorgespannt. Durch die mechanische Vorspannung des Kraftaufnehmers 12.1 werden Mikroporen zwischen den Elektroden 12.13 und den Stirnflächen der Piezoelemente 12.12', 12.12'', 12.12''' geschlossen. Die mechanische Vorspannung des Kraftaufnehmers 12.1 erfolgt durch das Verbindungsmittel 15. Das Verbindungsmittel 15.1 wird durch die Schraubenverbindung der Einziehschraube 15.11 durch die Bohrung 15.12 im Unterarm 11.2 und durch die Gehäusebohrung 12.11'' im Gehäuse 12.1 mit dem Innengewinde 15.13 im Oberarm 11.1 gebildet. Durch Verschrauben von Aussengewinde und Innengewinde 15.13 presst der Schraubenkopf der Einziehschraube 15.11 den Unterarm 11.2 gegen den Oberarm 11.1 und spannt die Elektroden 12.13 gegen die Stirnflächen der Piezoelemente 12.12', 12.12", 12.12''' mechanisch vor. Mit der mechanischen Verbindung von Oberarm 11.1 mit Unterarm 11.2 spannt das Verbindungsmittel 15 auch den Kraftaufnehmer 12.1 mechanisch vor. Die mechanische Vorspannung entspricht der Verbindungskraft der mechanischen Verbindung von Oberarm 11.1 mit Unterarm 11.2.

Die Auswerteeinheit 16 weist mindestens eine Wandlereinheit 16.1, mindestens einen Computer 16.2, mindestens eine Eingabeeinheit 16.3 und mindestens eine Ausgabeeinheit 16.4 auf.

Der Kraftaufnehmer 12.1 ist über das Signalkabel 12.14 elektrisch mit der Wandlereinheit 16.2 verbunden. Die Wandlereinheit 16.1 wandelt von den Signalelektroden 12.13', 12.13", 12.13''' über das Signalkabel 12.14 abgeleitete analoge Messsignale $Sa_1$ in digitale Messsignale $Sd_1$. Für jeden Fertigungsschritt mit einem benötigten Werkzeug 14 wandelt die Wandlereinheit 16.1 analoge Messsignale $Sa_1$ in digitale Messsignale $Sd_1$. Die Wandlereinheit 16.1 wandelt analoge Querschubsignale $Sa_1'$ in digitale Querschubsignale $Sd_1'$, sie wandelt analoge Vertikalschubsignale $Sa_1"$ in digitale Vertikalschubsignale $Sd_1"$, und sie wandelt analoge Horizontalkraftsignale $Sa_1'''$ in digitale Horizontalkraftsignale $Sd_1'''$. Die digitalen Messsignale $Sd_1$ umfassen die digitalen Querschubsignale $Sd_1'$, die digitalen Vertikalschubsignale $Sd_1"$ und die digitalen Horizontalkraftsignale $Sd_1'''$.

Der Computer 16.2 weist mindestens einen Datenprozessor und mindestens einen Datenspeicher auf. Der Computer 16.2 ist über die Eingabeeinheit 16.3 bedienbar. Die Eingabeeinheit 16.3 kann eine Tastatur sein, zur Eingabe von Steuerbefehlen. Im Sinne der Erfindung bedeutet das Verb "Bedienen", dass der Computer 16.2 von einer Person über die Eingabeeinheit 16.3 mit Steuerbefehlen gestartet, gesteuert und ausgeschaltet wird. Der Computer 16.2 liest die digitalen Messsignale $Sd_1$ ein. Der Computer 16.2 stellt eingelesene digitale Messsignale $Sd_1$ auf der Ausgabeeinheit 16.4 dar. Die Ausgabeeinheit 16.4 kann ein Bildschirm sein, zur graphischen Darstellung der ausgewerteten digitalen Messsignale.

Bei der Auswertung der digitalen Messsignale $Sd_1$ liest der Computer 16.2 Referenzsignale R und Kalibrierfaktoren $\alpha_i$. Die Referenzsignale R sind spezifisch für den Werkstoff des Werkstücks 9 sowie für den Schneidstoff des benötigten Werkzeugs 14. Dabei sind Eigenschaften vom Werkstoff und vom Schneidstoff wie Festigkeit, Zähigkeit und Härte entscheidend. Für jeden Werkstoff des Werkstücks 9 und jeden Schneidstoff des benötigten Werkzeugs 14 sind Referenzsignale R im Datenspeicher des Computers 16.2 gespeichert und vom Computer 16.2 aus dem Datenspeicher auslesbar. Für jedes benötigte Werkzeug 14 umfasst ein Referenzsignal R ein Querschub-Referenzsignale R', ein Vertikalschub-Referenzsignal R" und ein Horizontalkraft-Referenzsignal R'''.

Die vom Kraftaufnehmer 12.1, 12.2 gemessene Werkzeugkraft Kw ist zudem spezifisch für eine Lage i des benötigten Werkzeugs 14 zum Kraftaufnehmer 12.1, 12.2. Im zweiten Ausführungsbeispiel gemäss Fig. 2 weist der Werkzeugarm 11 der Zerspanungsmaschine 1 acht Aussparungen 13.21 - 13.28 in acht verschiedenen Lagen i, i = 1 ... 8 auf und die Zerspanungsmaschine 1 weist zwei Kraftaufnehmer 12.1, 12.2 auf. Jede der acht Aussparungen 13.21 - 13.28 liegt in unterschiedlichen Distanzen zu jedem der zwei Kraftaufnehmer 12.1, 12.2. Die unterschiedlichen Distanzen von jeden der Aussparungen 13.21 - 13.28 zu jedem der zwei Kraftaufnehmer 12.1, 12.2 haben zur Folge, dass jedes benötigte Werkzeug 14 in einer spezifischen Lage i zum Kraftaufnehmer 12.1, 12.2 angeordnet ist, sodass auch der Kraftfluss der Werkzeugkraft Kw spezifisch für die Lage i des benötigten Werkzeugs 14 zu jedem der zwei Kraftaufnehmer 12.1, 12.2 ist.

Deshalb sind für jede Lage i Kalibrierfaktoren $\alpha_i$ im Datenspeicher des Computers 16.2 gespeichert und vom Computer 16.2 aus dem Datenspeicher auslesbar. Jeder Kalibrierfaktor $\alpha_i$ umfasst einen Querschub-Kalibrierfaktor $\alpha_i'$, einen Vertikalschub-Kalibrierfaktor $\alpha_i"$ und einen Horizontalkraft-Kalibrierfaktor $\alpha_i'''$.

Zur Auswertung kalibriert der Computer 16.2 digitale Messsignale $Sd_1$ eines benötigten Werkzeugs 14 durch Multiplikation mit einem Kalibrierfaktor $\alpha_i$ der Lage i des benötigten Werkzeugs 14 zum Kraftaufnehmer 12.1, 12.2. Für jeden Verfahrensschritt bildet der Computer 16.2 eine Differenz $\Delta$ zwischen dem kalibrierten digitalen Messsignalen $Sd_1$ und dem ausgelesenen Referenzsignal R für den Werkstoff des Werkstücks 9 und den Schneidstoff des benötigten Werkzeugs 14.

$$\alpha_i * Sd_1 - R = \Delta \leq T = 10\% * R$$

Im Datenspeicher des Computers 16.2 ist mindestens eine vordefinierte Toleranzgrösse T gespeichert, welche vordefinierte Toleranzgrösse T für jeden Fertigungsschritt ausgelesen wird. Jede vordefinierte Toleranzgrösse T umfasst eine vordefinierte Querschub-Toleranzgrösse T', eine vordefinierte Vertikalschub-Toleranzgrösse T'' und eine vordefinierte Horizontalkraft-Toleranzgrösse T'''.

Für jeden Fertigungsschritt wird die Differenz $\Delta$ mit der vordefinierten Toleranzgrösse T verglichen. Falls die Differenz $\Delta$ kleiner/gleich als die vordefinierte Toleranzgrösse T ist, ist das benötigte Werkzeuge 14 nicht verschliessen und wird weiterverwendet, und dass falls die Differenz $\Delta$ grösser als die vordefinierte Toleranzgrösse T ist, ist das benötigte Werkzeuge (14) verschliessen und wird ersetzt. In erster Näherung ist die vordefinierte Toleranzgrösse T gleich 10% der Referenzsignale R.

Die Auswertung durch den Computer 16.2 erfolgt auch für digitale Messignale $Sd_1'$, $Sd_1''$, $Sd_1'''$ der Werkzeugkraftkomponenten Kwx, Kwy, Kwz der Werkzeugkraft Kw.

Für jeden Verfahrensschritt bildet der Computer 16.2 eine Querschub-Differenz $\Delta'$ zwischen dem kalibrierten digitalen Querschub-Messignalen $Sd_1'$ und dem ausgelesenen Querschub-Referenzsignal R' für den Werkstoff des Werkstücks 9 und den Schneidstoff des benötigten Werkzeugs 14. Falls die Querschub-Differenz $\Delta'$ kleiner/gleich als die vordefinierte Querschub-Toleranzgrösse T' ist, ist das benötigte Werkzeuge 14 nicht verschliessen und wird weiterverwendet, und dass falls die Querschub-Differenz $\Delta'$ grösser als die vordefinierte Querschub-Toleranzgrösse T' ist, ist das benötigte Werkzeuge (14) verschliessen und wird ersetzt. In erster Näherung ist die vordefinierte Querschub-Toleranzgrösse T' gleich 10% der Querschub-Referenzsignale R'.

$$\alpha_i' \; * \; Sd_1' \; - \; R' \; = \; \Delta' \; \leq \; T' \; = \; 10\% \; * \; R'$$

Für jeden Verfahrensschritt bildet der Computer 16.2 eine Vertikalschub-Differenz $\Delta''$ zwischen dem kalibrierten digitalen Vertikalschub-Messignalen $Sd_1''$' und dem ausgelesenen Vertikalschub-Referenzsignal R'' für den Werkstoff des Werkstücks 9 und den Schneidstoff des benötigten Werkzeugs 14. Falls die Vertikalschub-Differenz $\Delta''$ kleiner/gleich als die vordefinierte Vertikalschub-Toleranzgrösse T'' ist, ist das benötigte Werkzeuge 14 nicht verschliessen und wird weiterverwendet, und dass falls die Vertikalschub-Differenz $\Delta''$ grösser als die vordefinierte Vertikalschub-Toleranzgrösse T'' ist, ist das benötigte Werkzeuge (14) verschliessen und wird ersetzt. In erster Näherung ist die vordefinierte Vertikalschub-Toleranzgrösse T'' gleich 10% der Vertikalschub-Referenzsignale R''.

$$\alpha_i'' \; * \; Sd_1'' \; - \; R'' \; = \; \Delta'' \; \leq \; T'' \; = \; 10\% \; * \; R''$$

Für jeden Verfahrensschritt bildet der Computer 16.2 eine Horizontalkraft-Differenz $\Delta'''$ zwischen dem kalibrierten digitalen Horizontalkraft-Messignalen $Sd_1'''$ und dem ausgelesenen Horizontalkraft-Referenzsignal R''' für den Werkstoff des Werkstücks 9 und den Schneidstoff des benötigten Werkzeugs 14. Falls die Horizontalkraft-Differenz $\Delta'''$ kleiner/gleich als die vordefinierte Horizontalkraft-Toleranzgrösse T''' ist, ist das benötigte Werkzeuge 14 nicht verschliessen und wird weiterverwendet, und dass falls die Horizontalkraft-Differenz $\Delta'''$ grösser als die vordefinierte Horizontalkraft-Toleranzgrösse T''' ist, ist das benötigte Werkzeuge (14) verschliessen und wird ersetzt. In erster Näherung ist die vordefinierte Horizontalkraft-Toleranzgrösse T''' gleich 10% der Horizontalkraft-Referenzsignale R'''.

$$\alpha_i''' \; * \; Sd_1''' \; - \; R''' \; = \; \Delta''' \; \leq \; T''' \; = \; 10\% \; * \; R'''$$

In Analogie hierzu, werden bei Verwendung von zwei Kraftaufnehmern, wie in der zweiten Ausführungsform der Zerspanungsmaschine gemäss Fig. 2, von den zwei Kraftaufnehmern erste und zweite analoge Messsignale erzeugt, und die ersten und zweiten analogen Messsignale werden von der Wandlereinheit in erste und zweite digitale Messsignale gewandelt. Der Computer bildet für jedes benötigte Werkzeug eine Summe von ersten und zweiten digitalen Messsignalen und multipliziert diese Summe von ersten und zweiten digitalen Messsignalen mit einem Kalibrierfaktor einer Lage des benötigten Werkzeugs und subtrahiert von dieser kalibrierten Summe von ersten und zweiten digitalen Messsignalen ein Referenzsignale der Paarung aus Werkstoff des Werkstücks und Schneidstoff des benötigten Werkzeugs.

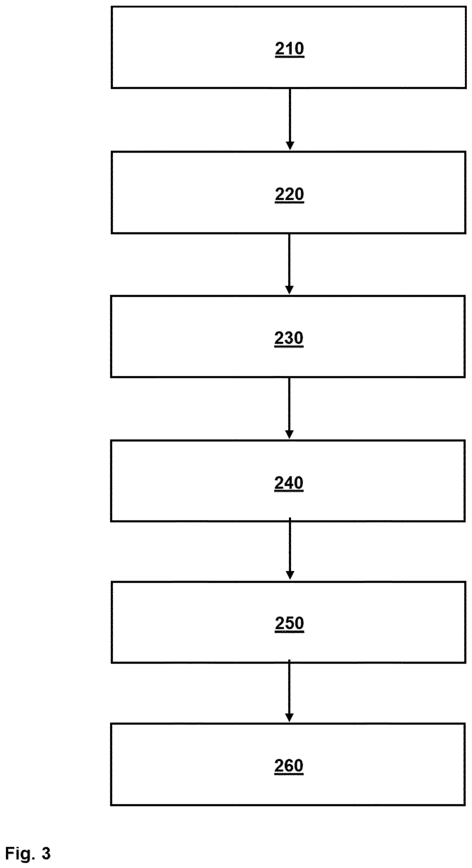

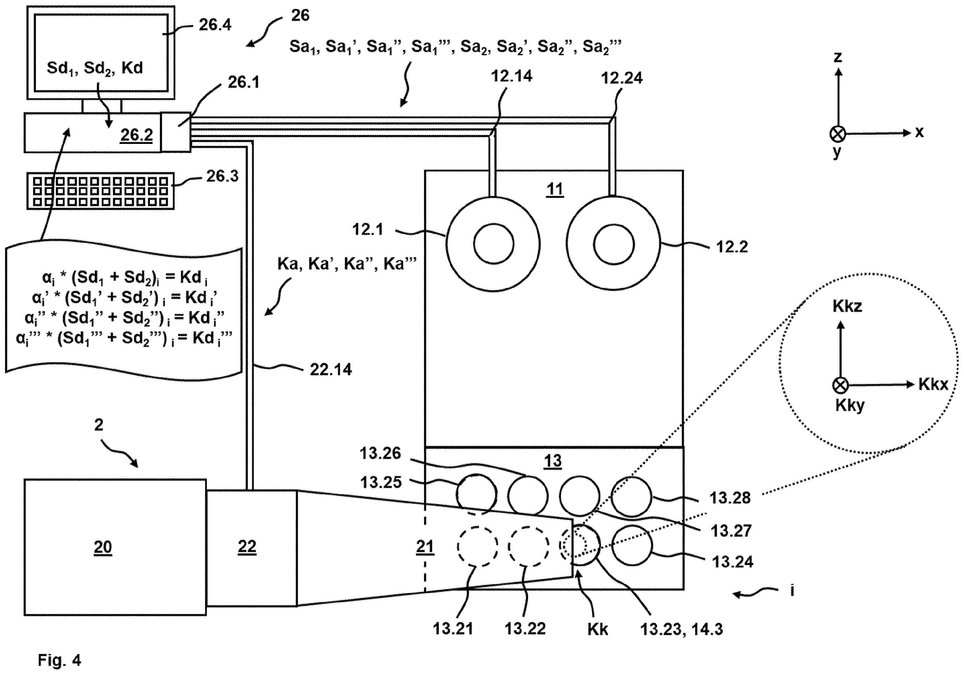

Fig. 3 zeigt ein Flussdiagramm mit Verfahrensschritten 210 - 260 zum Kalibrieren des mindestens einen Kraftaufnehmers 12.1, 12.2 der Zerspanungsmaschine 1 der beiden Ausführungsformen gemäss Fig. 1 oder 2. Fig. 4 zeigt Teile einer Ausführungsform einer Kalibriervorrichtung 2 zur Durchführung der Verfahrensschritte gemäss Fig. 3 mit der zweiten Ausführungsform der Zerspanungsmaschine 1 gemäss Fig. 2.

Die Kalibriervorrichtung 2 weist einen Kalibrierkontakt 21, einen Kalibrierkraftaufnehmer 21, eine Kalibrierantriebseinheit 20 und eine Auswerteeinheit 26 auf.

In einem ersten Verfahrensschritt 210 wird ein Maschinenarm 11 mit einem benötigten Werkzeug 14 und mit mindestens einem Kraftaufnehmer 12.1, 12.2 bereitgestellt.

In einem weiteren Verfahrensschritt 220 wird der Kraftaufnehmer 12.1, 12.2 mit der Auswerteeinheit 26 kontaktiert. Die Auswerteeinheit 26 weist mindestens eine Wandlereinheit 26.1, mindestens einen Computer 26.2, mindestens eine Eingabeeinheit 26.3 und mindestens eine Ausgabeeinheit 26.4 auf.

In der Ausführungsform der Kalibriervorrichtung 2 gemäss Fig. 4 werden zwei Kraftaufnehmer 12.1, 12.2 über Signalkabel 12.14, 12.24 elektrisch mit der Wandlereinheit 26.2 verbunden.

In einem weiteren Verfahrensschritt 230 wird durch die Kalibriervorrichtung 2 eine Kalibrierkraft Kk an ein benötigtes Werkzeug 14 aufgebracht.

Die Kalibriervorrichtung 2 weist eine Kalibrierantriebseinheit 20, einen Kalibrierkontakt 21 und einen Kalibrierkraftaufnehmer 22 auf.

Die Kalibrierantriebseinheit 20 ist eine elektrische Antriebseinheit, eine pneumatische Antriebseinheit, usw. Die Kalibrierantriebseinheit 20 bewegt den Kalibrierkontakt 21 und den Kalibrierkraftaufnehmer 22 entlang der drei Achsen x, y und z. Die Kalibrierantriebseinheit 20 richtet den Kalibrierkontakt 21 an benötigten Werkzeugen 14 in Lagen i in der Werkzeughalterung 13 präzise aus und übt die Kalibrierkraft Kk auf das benötigte Werkzeug 14 aus. Die Kalibrierkraft Kk weist drei Kalibrierkraftkomponenten Kkx, Kky, Kkz auf. Die Kalibrierkraft Kk weist eine Querschubkalibrierkomponente Kkx in Richtung der Querachse x, eine Vertikalschubkalibrierkomponente Kkz in Richtung der Vertikalachse y und eine Horizontalkraftkalibrierkomponente Kkz in Richtung der Horizontalachse z auf.

In der Ausführungsform der Kalibriervorrichtung 2 gemäss Fig. 4 ist der Kalibrierkontakt 22 fingerförmig und weist eine Spitze zum Ausüben der Kalibrierkraft Kk auf. Der Kalibrierkontakt 22 ist aus mechanisch beständigem Material wie Stahl, Werkzeugstahl, usw. Der Kalibrierkontakt 22 ist aus Material mit hohem Elastizitätsmodul grösser 200GPa. Aufgrund des hohen Elastizitätsmoduls überträgt der Kalibrierkontakt 22 die Kalibrierkraft Kk inelastischer als ein Kalibrierkontakt aus einem Material mit niedrigerem Elastizitätsmodul.

Der Kalibrierkraftaufnehmer 22 misst die drei Kalibrierkraftkomponenten Kkx, Kky, Kkz der Kalibrierkraft Kk. Der Kalibrierkraftaufnehmer 22 kann nach einem beliebigen Messprinzip funktionieren. Bedingung beim Kalibrieren ist, dass der Kalibrierkraftaufnehmer 22 die Kalibrierkraftkomponenten Kkx, Kky, Kkz der Kalibrierkraft Kk mit einer um mindestens eine Grössenordnung grösseren Genauigkeit als der mindestens eine Kraftaufnehmer 12.1 12.2 misst. Der Kalibrierkraftaufnehmer 22 ist über ein Kalibriersignalkabel 22.14 elektrisch mit der Wandlereinheit 26.2 verbunden.

In einem weiteren Verfahrensschritt 240 werden Kalibrierkraftkomponenten Kkx, Kky, Kkz durch den Kraftaufnehmer 12.1, 12.2 und durch den Kalibrierkraftaufnehmer 22 der Kalibriervorrichtung 2 gemessen.

Der erste Kraftaufnehmer 12.1 erzeugt erste analoge Messignale $Sa_1$. Die ersten analogen Messsignale $Sa_1$ umfassen erste analoge Querschubsignale $Sa_1'$ für eine Querschubkalibrierkomponente Kkx in Richtung der Querachse x, erste analoge Vertikalschubsignale $Sa_1''$ für eine Vertikalschubkalibrierkomponente Kkz in Richtung der Vertikalachse z und erste analoge Horizontalkraftsignale $Sa_1'''$ für eine Horizontalkraftkalibrierkomponente Kky in Richtung der Horizontalachse y.

Der zweite Kraftaufnehmer 12.2 erzeugt zweite analoge Messignale $Sa_2$. Die zweiten analogen Messsignale $Sa_2$ umfassen zweite analoge Querschubsignale $Sa_2'$ für eine Querschubkalibrierkomponente Kkx in Richtung der Querachse x, zweite analoge Vertikalschubsignale $Sa_2''$ für eine Vertikalschubkalibrierkomponente Kkz in Richtung der Vertikalachse z und zweite analoge Horizontalkraftsignale $Sa_2'''$ für eine Horizontalkraftkalibrierkomponente Kky in Richtung der Horizontalachse y.

Der Kalibrierkraftaufnehmer 22 erzeugt analoge Kalibriersignale Ka. Die Kalibriersignale Ka umfassen analoge Querschubkalibriersignale Ka' für eine Querschubkalibrierkomponente Kkx in Richtung der Querachse x, analoge Vertikalschubkalibriersignale Ka'' für eine Vertikalschubkalibrierkomponente Kkz in Richtung der Vertikalachse z und analoge Horizontalkraftkalibriersignale Ka''' für eine Horizontalkraftkalibrierkomponente Kky in Richtung der Horizontalachse y.

In einem weiteren Verfahrensschritt 250 werden Messignale Sa des Kraftaufnehmers 12.1, 12.2 und Kalibriersignale Ka des Kalibrierkraftaufnehmers 22 an die Auswerteinheit 26 abgeleitet.

In der Ausführungsform der Kalibriervorrichtung 2 gemäss Fig. 4 wandelt die Wandlereinheit 26.1 von den Signalelektroden über die Signalkabel 12.14, 12.24 der beiden Kraftaufnehmer 12.1, 12.2 abgeleitete analoge Messsignale $Sa_1$, $Sa_2$ in digitale Messsignale $Sd_1$, $Sd_2$.

Die Wandlereinheit 26.1 wandelt erste analoge Querschubsignale $Sa_1'$ in erste digitale Querschubsignale $Sd_1'$, sie wandelt erste analoge Vertikalschubsignale $Sa_1''$ in erste digitale Vertikalschubsignale $Sd_1''$, und sie wandelt erste analoge Horizontalkraftsignale $Sa_1'''$ in erste digitale Horizontalkraftsignale $Sd_1'''$. Die ersten digitalen Messsignale $Sd_1$ umfassen die ersten digitalen Querschubsignale $Sd_1'$, die ersten digitalen Vertikalschubsignale $Sd_1''$ und die ersten digitalen Horizontalkraftsignale $Sd_1'''$.

Die Wandlereinheit 26.1 wandelt zweite analoge Querschubsignale $Sa_2'$ in zweite digitale Querschubsignale $Sd_2'$, sie wandelt zweite analoge Vertikalschubsignale $Sa_2''$ in zweite digitale Vertikalschubsignale $Sd_2''$, und sie wandelt zweite analoge Horizontalkraftsignale $Sa_2'''$ in zweite digitale Horizontalkraftsignale $Sd_2'''$. Die zweiten digitalen Messsignale $Sd_2$ umfassen die zweiten digitalen Querschubsignale $Sd_2'$, die zweiten digitalen Vertikalschubsignale $Sd_2''$ und die zweiten digitalen Horizontalkraftsignale $Sd_2'''$.

Die Wandlereinheit 26.1 wandelt vom Kalibrierkraftaufnehmer 22 über das Signalkabel 22.14 abgeleitete analoge Kalibriersignale Ka in digitale Kalibriersignale Kd.

Die Wandlereinheit 26.1 wandelt analoge Querschubkalibriersignale Ka' in digitale Querschubkalibriersignale Sd', sie wandelt analoge Vertikalschubkalibriersignale Ka'' in digitale Vertikalschubkalibriersignale Kd'', und sie wandelt analoge Horizontalkraftkalibriersignale Ka''' in digitale Horizontalkraftkalibriersignale Kd'''. Die digitalen Kalibersignale Kd umfassen die digitalen Querschubkalibriersignale Kd', die digitalen Vertikalschubkalibriersignale Kd'' und die digitalen Horizontalkraftkalibriersignale Kd'''.

In einem weiteren Verfahrensschritt 260 werden die abgeleiteten Messsignale $Sa_1$ und die abgeleiteten Kalibriersignale Ka in der Auswerteeinheit 26 abgeglichen.

Der Computer 26.2 weist mindestens einen Datenprozessor und mindestens einen Datenspeicher auf. Der Computer 26.2 ist über die Eingabeeinheit 26.3 bedienbar. Die Eingabeeinheit 26.3 kann eine Tastatur sein, zur Eingabe von Steuerbefehlen. Im Sinne der Erfindung bedeutet das Verb "Bedienen", dass der Computer 26.2 von einer Person über die Eingabeeinheit 26.3 mit Steuerbefehlen gestartet, gesteuert und ausgeschaltet wird. Der Computer 26.2 liest die digitalen Messsignale $Sd_1$, $Sd_2$ mit den digitalen Kalibriersignalen Kd ein. Der Computer 26.2 stellt abgeglichene digitale Messsignale $Sd_1$, $Sd_2$ und digitale Kalibriersignale Kd auf der Ausgabeeinheit 26.4 dar. Die Ausgabeeinheit 26.4 kann ein Bildschirm sein, zur graphischen Darstellung der ausgewerteten digitalen Messsignale.

Der Computer 26.2 gleicht digitale Messsignale $Sd_1$, $Sd_2$ mit digitalen Kalibriersignalen Kd ab. Der Abgleich erfolgt spezifisch für eine Lage i eines benötigten Werkzeugs 14. Der Kalibrierkontakt 22 übt eine Kalibrierkraft Kk auf ein drittes benötigtes Werkzeug 14.3 in einer dritten Aussparung 13.23 aus. Die dritte Aussparung 13.23 ist die dritte Lage i = 3, das benötigte Werkzeug 14.3 befindet sich in der dritten Lage i = 3.

Beim Abgleich der Ausführungsform der Kalibriervorrichtung 2 gemäss Fig. 4 bildet der Computer 26.2 eine lagenspezifische Summe $(Sd_1 + Sd_2)_i$ der ersten und zweiten digitalen Messsignale $Sd_1$, $Sd_2$ und gleicht sie lagenspezifische mit dem digitalen Kalibriersignal $Kd_i$ ab. Ein Ergebnis dieses Abgleichs ist ein lagenspezifischer Kalibrierfaktor $\alpha_i$.

$$\alpha_i \ * \ (Sd_1 + Sd_2)_i = Kd_i \qquad i = 1 \ ... \ 8$$

Bei Identität der lagenspezifischen Summe $(Sd1 + Sd2)_i$ mit dem digitalen Kalibriersignal $Kd_i$ ist der lagenspezifische Kalibrierfaktor $\alpha_i = 1.00$. Typischerweise schwankt der lagenspezifische Kalibrierfaktor $\alpha_i$ in einem Bereich von 0.85 bis 1.15.

In Analogie hierzu, werden bei Verwendung von einem einzigen Kraftaufnehmer, wie in der ersten Ausführungsform der Zerspanungsmaschine gemäss Fig. 1, vom Kraftaufnehmer analoge Messsignale erzeugt, die analogen Messsignale werden von der Wandlereinheit in digitale Messsignale gewandelt. Der Computer gleicht die digitalen Messsignale lagenspezifisch mit digitalen Kalibriersignalen ab. Bei Verwendung von nur einem Kraftaufnehmer liegen nur digitale Messsignale dieses einen Kraftaufnehmers vor und es wird somit keine lagenspezifische Summe von digitalen Messsignalen von zwei Kraftaufnehmern gebildet.

Beim Abgleich bildet der Computer 26.2 eine lagenspezifische Summe $(Sd_1' + Sd_2')_i$ der digitalen Querschubsignale $Sd_1'$, $Sd_2'$ und vergleicht sie mit dem lagenspezifischen digitalen Querschubkalibriersignal $Kd_i'$. Ein Ergebnis des Abgleichs ist ein Querschub-Kalibrierfaktor $\alpha_i'$.

$$\alpha_i' \ * \ (Sd_1' + Sd_2')_i = Kd_i' \qquad i = 1 \ ... \ 8$$

Beim Abgleich bildet der Computer 26.2 eine lagenspezifische Summe $(Sd_i'' + Sd_2'')_i$ der digitalen Vertikalschubsignale $Sd_1''$, $Sd_2''$ und vergleicht sie mit dem lagenspezifischen digitalen Vertikalschubkalibriersignal $Kd_i''$. Ein Ergebnis des Abgleichs ist ein Vertikalschub-Kalibrierfaktor $\alpha_i''$.

$$\alpha_i'' \ * \ (Sd_1'' + Sd_2'')_i = Kd_i'' \qquad i = 1 \ ... \ 8$$

Beim Abgleich bildet der Computer 26.2 eine lagenspezifische Summe $(Sd_1''' + Sd_2''')_i$ der digitalen Horizontalkraftsignale $Sd_1'''$, $Sd_2'''$ und vergleicht sie mit dem lagenspezifischen digitalen Horizontalkraftkalibriersignal $Kd_i'''$. Ein Ergebnis des Abgleichs ist ein Horizontalkraft-Kalibrierfaktor $\alpha_i'''$.

$$\alpha_i''' \ * \ (Sd_1''' + Sd_2''')_i = Kd_i''' \qquad i = 1 \ ... \ 8$$

Der Kalibrierfaktor $\alpha_i$ ist im Datenspeicher des Computers 16 der Auswerteeinheit 16 speicherbar. Auch jeder Querschub-Kalibrierfaktor $\alpha_i'$, jeder Vertikalschub-Kalibrierfaktor $\alpha_i''$ und jeder Horizontalkraft-Kalibrierfaktor $\alpha_i'''$ ist im Datenspeicher des Computers 16 der Auswerteeinheit 16 speicherbar.

**Bezugszeichenliste**

| | |
|---|---|
| 1 | Zerspanungsmaschine |
| 2 | Kalibriervorrichtung |
| 9 | Werkstück |
| 10 | Antriebseinheit |
| 11 | Maschinenarm |
| 11.1 | Oberarm |
| 11.2 | Unterarm |
| 12.1, 12.2 | Kraftaufnehmer |
| 12.11, 12.12 | Gehäuse |
| 12.11', 12.11''' | Gehäusestirnfläche |
| 12.11'' | Gehäusebohrung |
| 12.12 | piezoelektrisches Material |
| 12.12' - 12.12''' | Piezoelement |
| 12.13 | elektrisch leitfähiges Material |
| 12.13' - 12.13''' | Signalelektrode |
| 12.3'''' | Masseelektrode |
| 12.14, 12.24 | Signalkabel |
| 13 | Werkzeughalterung |
| 13.11, 13.12 | Haltemittel |
| 13.21 - 13.28 | Aussparung |
| 14, 14.1 - 14.8 | benötigtes Werkzeug |
| 14.11, 14.12 | Schneidkeil |
| 14.21, 14.22 | Schaft |
| 15, 15.1, 15.2 | Verbindungsmittel |
| 15.11, 15.21 | Einziehschraube |
| 15.12, 15.22 | Bohrung |
| 15.13, 15.23 | Innengewinde |
| 16, 26 | Auswerteeinheit |
| 16.1, 26.1 | Wandlereinheit |
| 16.2, 26.2 | Computer |
| 16.3, 26.3 | Eingabeeinheit |
| 16.4, 26.4 | Ausgabeeinheit |
| 20 | Kalibrierantriebseinheit |
| 21 | Kalibrierkontakt |
| 22 | Kalibrierkraftaufnehmer |
| 22.14 | Kalibriersignalkabel |
| 210 - 260 | Verfahrensschritte |
| $\alpha$ | Kalibrierfaktor |
| $\alpha'$ | Querschub-Kalibrierfaktor |
| $\alpha''$ | Vertikalschub-Kalibrierfaktor |
| $\alpha'''$ | Horizontalkraft-Kalibrierfaktor |
| $\Delta$ | Differenz |
| $\Delta'$ | Querschub-Differenz |
| $\Delta''$ | Vertikalschub-Differenz |
| $\Delta'''$ | Horizontalkraft-Differenz |
| i | Lage |
| Kw | Werkzeugkraft |
| Kwx, Kwy, Kwz | Werkzeugkraftkomponente |
| Kk | Kalibrierkraft |
| Kkx, Kky, Kkz | Kalibrierkraftkomponente |
| $Sa_1, Sa_2$ | analoges Messignal |
| $Sa_1', Sa_2'$ | analoges Querschubsignal |
| $Sa_1'', Sa_2''$ | analoges Vertikalschubsignal |
| $Sa_1''', Sa_2''$ | analoges Horizontalkraftssignal |
| $Sd_1, Sd_2$ | digitales Messsignal |
| $Sd_1', Sd_2'$ | digitales Querschubsignal |
| $Sd_1'', Sd_2''$ | digitales Vertikalschubsignal |
| $Sd_1''', Sd_2'''$ | digitales Horizontalkraftssignal |

| R | Referenzsignal |
| R' | Querschub-Referenzsignal |
| R'' | Vertikalschub-Referenzsignal |
| R''' | Horizontalkraft-Referenzsignal |
| Ka | analoges Kalibriersignal |
| Ka' | analoges Querschubkalibriersignal |
| Ka" | analoges Vertikalschubkalibriersignal |
| Ka''' | analoges Horizontalkraftkalibriersignal |
| Kd | digitales Kalibriersignal |
| Kd' | digitales Querschubkalibriersignal |
| Kd" | digitales Vertikalschubkalibriersignal |
| Kd''' | digitales Horizontalkraftkalibriersignal |
| T | vordefinierte Toleranzgrösse |
| T' | vordefinierte Querschub-Toleranzgrösse |
| T" | vordefinierte Vertikalschub-Toleranzgrösse |
| T''' | vordefinierte Horizontalkraft-Toleranzgrösse |
| x | Querachse |
| y | Horizontalachse |
| z | Vertikalachse |
| xy | Querebene |

**Patentansprüche**

1. Zerspanungsmaschine (1) zur spanenden Formgebung eines Werkstücks (9), welche spanende Formgebung in einer zeitlichen Abfolge von Fertigungsschritten mit mehreren benötigten Werkzeugen (14.1 - 14.8) erfolgt; mit einer Werkzeughalterung (13) zum gleichzeitigen Halten der benötigten Werkzeuge (14.1 - 14.8); mit einem Werkzeugarm (11) zum Befestigen der Werkzeughalterung (13) an einer Antriebseinheit (10); und welche Antriebseinheit (10) den Werkzeugarm (11) bewegt, durch welches Bewegen des Werkzeugarms (11) in jedem Fertigungsschritt eines der benötigten Werkzeuge (14) an einem Werkstück (9) ausrichtbar ist, wobei der Werkzeugarm (11) einen Oberarm (11.1) und einen Unterarm (11.2) aufweist, wobei der Oberarm (11.1) und der Unterarm (11.2) separate Einheiten sind und über ein Verbindungsmittel (15) mechanisch miteinander verbunden sind; wobei der Oberarm (11.1) an der Antriebseinheit (10) befestigt ist; wobei der Unterarm (11.2) an der Werkzeughalterung (13) befestigt ist; wobei mindestens ein Kraftaufnehmer (12.1, 12.2) räumlich zwischen dem Oberarm (11.1) und dem Unterarm (11.2) angeordnet ist, welcher Kraftaufnehmer (12.1, 12.2) eine bei der spanenden Formgebung eines Werkstücks (9) von einem der benötigten Werkzeuge (14.1 - 14.8) ausgeübte Werkzeugkraft (Kw) im Krafthauptschluss messen kann; und wobei das Verbindungsmittel (15) mit der mechanischen Verbindung von Oberarm (11.1) mit Unterarm (11.2) auch den Kraftaufnehmer (12.1, 12.2) mechanisch vorspannt.

2. Zerspanungsmaschine (1) nach Anspruch 1, wobei die Werkzeughalterung (13) aus Material mit hohem Elastizitätsmodul grösser 200GPa ist.

3. Zerspanungsmaschine (1) nach einem der Ansprüche 1 oder 2, wobei der Werkzeugarm (11) iate aus Material mit hohem Elastizitätsmodul grösser 200GPa ist.

4. Verwendung eines Werkzeugarms (11) in einer Zerspanungsmaschine (1) zur spanenden Formgebung eines Werkstücks (9), welche spanende Formgebung in einer zeitlichen Abfolge von Fertigungsschritten mit mehreren benötigten Werkzeugen (14.1 - 14.8) erfolgt; mit einer Werkzeughalterung (13) zum gleichzeitigen Halten der benötigten Werkzeuge (14.1 - 14.8); welcher Werkzeugarm (11) die Werkzeughalterung (13) an einer Antriebseinheit (10) befestigt; und welche Antriebseinheit (10) den Werkzeugarm (11) bewegt, durch welches Bewegen des Werkzeugarms (11) in jedem Fertigungsschritt eines der benötigten Werkzeuge (14) an einem Werkstück (9) ausrichtbar ist, wobei der Werkzeugarm (11) einen Oberarm (11.1) und einen Unterarm (11.2) aufweist, wobei der Oberarm (11.1) und der Unterarm (11.2) separate Einheiten sind; wobei der Oberarm (11.1) und der Unterarm (11.2) über ein Verbindungsmittel (15) mechanisch miteinander verbunden sind; wobei der Oberarm (11.1) an der Antriebseinheit (10) befestigt ist; wobei der Unterarm (11.2) an der Werkzeughalterung (13) befestigt ist; wobei mindestens ein Kraftaufnehmer (12.1, 12.2) räumlich zwischen dem Oberarm (11.1) und dem Unterarm (11.2) angeordnet ist, welcher Kraftaufnehmer (12.1, 12.2) eine bei der spanenden Formgebung eines Werkstücks (9) von einem der benötigten Werkzeuge (14.1 - 14.8) ausgeübte Werkzeugkraft (Kw) im Krafthauptschluss misst; und wobei das Verbindungsmittel (15) mit der mechanischen Verbindung von Oberarm (11.1) mit Unterarm (11.2) auch den Kraftaufnehmer (12.1, 12.2) mechanisch vorspannt.

5. Verfahren zum Betrieb einer Zerspanungsmaschine (1) nach einem der Ansprüche 1 bis 3, wobei zur spanenden Formgebung des Werkstücks (9) in jedem Fertigungsschritt eines der benötigten Werkzeuge (14.1 - 14.8) am Werkstück (9) ausgerichtet wird; und wobei vom Kraftaufnehmer (12.1, 12.2) eine bei der spanenden Formgebung des Werkstücks (9) vom benötigten Werkzeug (14.1 - 14.8) ausgeübte Werkzeugkraft (Kw) gemessen wird.

6. Verfahren nach Anspruch 5, wobei das benötigte Werkzeug (14.1 - 14.8) bei der spanenden Formgebung des Werkstücks (9) eine Schnittbewegung in der von einer Querachse (x) und einer Vertikalachse (z) aufgespannten Querebene (xz) ausführt, wodurch die Werkzeugkraft (Kw) in Richtung der Querachse (x) eine Querschubkomponente (Kwx) und in Richtung der Vertikalachse (z) eine Vertikalschubkomponente (Kwz) aufweist; wobei das benötigte Werkzeug (14.1 - 14.8) bei der spanenden Formgebung des Werkstücks (9) eine Vorschubbewegung in Richtung einer Horizontalachse (y) ausführt, wodurch die Werkzeugkraft (Kw) in Richtung der Horizontalachse (y) eine Horizontalkraftkomponente (Kwy) aufweist; und wobei vom Kraftaufnehmer (12.1, 12.2) für jede in einem Fertigungsschritt gemessene Werkzeugkraft (Kw) analoge Messsignale ($Sa_1$, $Sa_2$) erzeugt werden.

7. Verfahren nach Anspruch 6, wobei die vom Kraftaufnehmer (12.1, 12.2) gemessenen analogen Messsignale ($Sa_1$, $Sa_2$) analoge Querschubsignale ($Sa_1'$, $Sa_2'$) für die Querschubkomponente (Kwx) in Richtung der Querachse (x), analoge Vertikalschubsignale ($Sa_1''$, $Sa_2''$) für eine Vertikalschubkomponente (Kwz) in Richtung der Vertikalachse (z) und analoge Horizontalkraftsignale ($Sa_1'''$, $Sa_2'''$) für eine Horizontalkraftkomponente (Kwy) in Richtung der Horizontalachse (y) umfassen.

8. Verfahren nach Anspruch 6, wobei die Zerspanungsmaschine (1) mindestens eine Wandlereinheit (16.1) aufweist, welche Wandlereinheit (16.1) für jeden Fertigungsschritt mit einem benötigten Werkzeug (14.1 - 14.8) analoge Messsignale ($Sa_1$) in digitale Messignale ($Sd_1$) wandelt.

9. Verfahren nach Anspruch 8, wobei die Zerspanungsmaschine (1) mindestens einen Computer (16.2) aufweist, welcher Computer (16.2) für jeden Fertigungsschritt die digitalen Messignale ($Sd_1$, $Sd_2$) einliest; wobei im Computer (16.2) für einen Werkstoff des Werkstücks (9) und für einen Schneidstoff eines benötigten Werkzeugs (14.1 - 14.8) mindestens ein Referenzsignal (R) gespeichert ist, welches Referenzsignal (R) für jeden Fertigungsschritt ausgelesen wird; wobei im Computer (16.2) für eine Lage (i) eines benötigten Werkzeugs (14.1 - 14.8) zum Kraftaufnehmer (12.1, 12.2) mindestens ein spezifischer Kalibrierfaktor ($\alpha_i$) gespeichert ist, welche Kalibrierfaktor ($\alpha_i$) für jeden Fertigungsschritt ausgelesen wird; wobei für jeden Fertigungsschritt eingelesene digitale Messignale ($Sd_1$) durch Multiplikation mit dem ausgelesenen Kalibrierfaktor ($\alpha_i$) kalibriert werden; und wobei für jeden Fertigungsschritt eine Differenz ($\Delta$) zwischen den kalibrierten digitalen Messignalen ($Sd_1$) und dem ausgelesenen Referenzsignal (R) gebildet wird.

10. Verfahren nach Anspruch 9, wobei im Computer (16.2) mindestens eine vordefinierte Toleranzgrösse (T) gespeichert ist, welche vordefinierte Toleranzgrösse (T) für jeden Fertigungsschritt ausgelesen wird; wobei für jeden Fertigungsschritt die Differenz ($\Delta$) mit der vordefinierten Toleranzgrösse (T) verglichen wird; dass falls die Differenz ($\Delta$) kleiner/gleich als die vordefinierte Toleranzgrösse (T) ist, das benötigte Werkzeuge (14.1 - 14.8) nicht verschliessen ist und weiterverwendet wird; und dass falls die Differenz ($\Delta$) grösser als die vordefinierte Toleranzgrösse (T) ist, das benötigte Werkzeuge (14.1 - 14.8) verschliessen ist und ersetzt wird.

11. Verfahren nach einem der Ansprüche 6 bis 10, wobei der Kraftaufnehmer (12.1) ein erstes Piezoelement (12.12') aufweist, welches erste Piezoelement (12.12') so orientiert ist, dass es für die Querschubkomponente (Kwx) mit höchster Empfindlichkeit elektrische Polarisationsladungen erzeugt; wobei der Kraftaufnehmer (12.1) ein zweites Piezoelement (12.12'') aufweist, welches zweite Piezoelement (12.12'') so orientiert ist, dass es für die Vertikalschubkomponente (Kwz) mit höchster Empfindlichkeit elektrische Polarisationsladungen erzeugt; und wobei der Kraftaufnehmer (12.1) ein drittes Piezoelement (12.12''') aufweist, welches dritte Piezoelement (12.12''') so orientiert ist, dass es für die Horizontalkraftkomponente (Kwy) mit höchster Empfindlichkeit elektrische Polarisationsladungen erzeugt.

12. Verfahren zum Kalibrieren eines Kraftaufnehmers (12.1, 12.2) einer Zerspanungsmaschine (1) nach einem der Ansprüche 1 bis 3, unter Verwendung eines Kalibrierkraftaufnehmers (22), wobei in einem ersten Verfahrensschritt (210) ein Maschinenarm (11) der Zerspanungsmaschine (1) bereitgestellt wird, welcher Maschinenarm (11) ein benötigtes Werkzeug (14.1 - 14.8) und mindestens einen Kraftaufnehmer (12.1, 12.2) aufweist, welches benötigte Werkzeug (14.1 - 14.8) in einer Lage (i) zum Kraftaufnehmer (12.1, 12.2) angeordnet ist; wobei in einem weiteren Verfahrensschritt (230) eine Kalibrierkraft (Kk) an das benötigte Werkzeug (14.1 - 14.8) aufgebracht wird; dass in einem weiteren Verfahrensschritt (240) die Kalibrierkraft (Kk) vom Kraftaufnehmer (12.1, 12.2) und vom Kalibrierkraftaufnehmer (22) gemessen wird; wobei vom Kraftaufnehmer (12.1, 12.2) für die gemessene Kalibrierkraft (Kk) analoge Messsignale ($Sa_1$, $Sa_2$) erzeugt werden; wobei vom Kalibrierkraftaufnehmer (22) für die gemessene Kalibrierkraft (Kk) analoge Kalibriersignale (Ka) erzeugt werden; wobei analoge Messsignale ($Sa_1$, $Sa_2$) in digitale Messsignale ($Sd_1$, $Sd_2$) gewandelt werden; dass analoge Kalibriersignale (Ka) in digitale Kalibriersignale (Kd) gewandelt werden; und wobei in einem weiteren Verfahrensschritt (260) digitale Messsignale ($Sd_1$, $Sd_2$) und digitale Kalibriersignale (Kd) abgeglichen werden, wobei ein Ergebnis des Abgleichs ein für die Lage (i) des benötigten Werkzeugs (14.1 - 14.8) zum Kraftaufnehmer (12.1, 12.2) spezifischer Kalibrierfaktor ($\alpha_i$) ist.

**Claims**

1. A cutting machine (1) for chip-removing machining of a workpiece (9), said chip-removing machining being performed in a chronological sequence of manufacturing steps by using a plurality of required tools (14.1 - 14.8); comprising a tool holder (13) for simultaneously holding said required tools (14.1 - 14.8); comprising a tool arm (11) for connecting said tool holder (13) with a drive unit (10); and which drive unit (10) moves the tool arm (11), by which movement of the tool arm (11) one of the required tools (14) can be aligned with a workpiece (9) in each manufacturing step, wherein said tool arm (11) comprises an upper arm (11.1) and a lower arm (11.2), wherein the upper arm (11.1) and the lower arm (11.2) are separate units and are mechanically connected to one another by a connecting means (15); wherein the upper arm (11.1) is secured to the drive unit (10); wherein the lower arm (11.2) is secured to the tool holder (13); wherein at least one force transducer (12. 1, 12.2) is arranged in a position between the upper arm (11.1) and the lower arm (11.2), wherein during chip-removing machining of a workpiece (9) said force transducer (12.1, 12.2) is capable of measuring a tool force (Kw) exerted by any of the required tools (14.1 - 14.8) in the main flow of forces; and wherein said connecting means (15) with the mechanical connection of the upper arm (11.1) to the lower arm (11.2) mechanically preloads the force transducer (12.1, 12.2).

2. The cutting machine (1) according to claim 1, wherein the tool holder (13) is made of a material having a high modulus of elasticity of more than 200GPa.

3. The cutting machine (1) according to any of the claims 1 or 2, wherein the tool arm (11) is made of a material having a high modulus of elasticity of more than 200GPa.

4. Use of a tool arm (11) in a cutting machine (1) for chip-removing machining of a workpiece (9), said chip-removing machining being performed in a chronological sequence of manufacturing steps by using a plurality of required tools (14.1 - 14.8); comprising a tool holder (13) for simultaneously holding the required tools (14.1 - 14.8); wherein said tool arm (11) connects the tool holder (13) with a drive unit (10); and which drive unit (10) moves the tool arm (11), by which movement of the tool arm (11) one of the required tools (14) can be aligned with a workpiece (9) in each manufacturing step, wherein said tool arm (11) comprises an upper arm (11.1) and a lower arm (11.2) wherein the upper arm (11.1) and the lower arm (11.2) are separate units; wherein the upper arm (11.1) and the lower arm (11.2) are mechanically connected to one another by a connecting means (15); wherein the upper arm (11.1) is connected with the drive unit (10); wherein the lower arm (11.2) is connected with the tool holder (13); wherein at least one force transducer (12. 1, 12.2) is arranged in a position between the upper arm (11.1) and the lower arm (11.2), wherein during chip-removing machining of a workpiece (9) said force transducer (12.1, 12.2) is capable of measuring a tool force (Kw) exerted by any of the required tools (14.1 - 14.8) in the main flow of forces; and wherein said connecting means (15) with the mechanical connection of the upper arm (11.1) to the lower arm (11.2) mechanically preloads the force transducer (12.1, 12.2).

5. A process for operating a cutting machine (1) according to any of the claims 1 to 3, wherein for chip-removing machining of the workpiece (9) one of the required tools (14.1 - 14.8) is aligned with the workpiece (9) in each manufacturing step; and wherein a tool force (Kw) exerted by the required tool (14.1 - 14.8) during chip-removing machining of the workpiece (9) is measured by the force transducer (12.1, 12.2).

6. The process according to claim 5, wherein during chip-removing machining of the workpiece (9) the required tool (14.1 - 14.8) performs a cutting movement in the transverse plane (xz) defined by a transverse axis (x) and a vertical axis (z) so that the tool force (Kw) comprises a transverse shear component (Kwx) in the direction of the transverse axis (x) and a vertical shear component (Kwz) in the direction of the vertical axis (z); wherein during chip-removing machining of the workpiece (9) the required tool (14.1 - 14.8) performs an advancing movement in the direction of a horizontal axis (y) so that the tool force (Kw) comprises a horizontal force component (Kwy) in the direction of the horizontal axis (y); and wherein for each tool force (Kw) measured in a manufacturing step the force transducer (12.1, 12.2) generates analog measurement signals ($Sa_1$, $Sa_2$).

7. The process according to claim 6, wherein said analog measurement signals ($Sa_1$, $Sa_2$) measured by the force transducer (12.1, 12.2) include analog transverse shear signals ($Sa_1'$, $Sa_2'$) for the transverse shear component (Kwx) in the direction of the transverse axis (x), analog vertical shear signals ($Sa_1''$, $Sa_2''$) for a vertical shear component (Kwz) in the direction of the vertical axis (z) and analog horizontal force signals ($Sa_1''$, $Sa_2''$) for a horizontal force component (Kwy) in the direction of the horizontal axis (y).

8. The process according to claim 6, wherein the cutting machine (1) comprises at least one converter unit (16.1) wherein for each manufacturing step performed with a required tool (14.1 - 14.8) said converter unit (16.1) converts analog measurement signals ($Sa_1$) in digital measurement signals ($Sd_1$).

9. The process according to claim 8, wherein the cutting machine (1) comprises at least one computer (16.2) wherein for each manufacturing step said computer (16.2) loads the digital measurement signals ($Sd_1$, $Sd_2$) ;
wherein in said computer (16.2) is stored at least one reference signal (R) for a material of the workpiece (9) and for a cutting material of a required tool (14.1 - 14.8), which reference signal (R) is loaded for each manufacturing step; wherein in said computer (16.2) is stored at least one specific calibration factor ($\alpha_i$) for a position (i) of a required tool (14.1 - 14.8) relative to the force transducer (12.1, 12.2), which calibration factor ($\alpha_i$) is loaded for each manufacturing step; wherein digital measurement signals ($Sd_1$) loaded for each manufacturing step are calibrated by multiplying them with the loaded calibration factor ($\alpha_i$); and wherein for each manufacturing step a difference ($\Delta$) between the calibrated digital measurement signals ($Sd_1$) and the loaded reference signal (R) is calculated.

10. The process according to claim 9, wherein in said computer (16.2) is stored at least one predefined tolerance value (T), which predefined tolerance value (T) is loaded for each manufacturing step; wherein for each manufacturing step the difference ($\Delta$) is compared to the predefined tolerance value (T); and when the difference ($\Delta$) is smaller than/equal to the predefined tolerance value (T) the required tool (14.1 - 14.8) is not subject to abrasion and will be continued to use; and with a difference ($\Delta$) that is greater than the predefined tolerance value (T) the required tool (14.1 - 14.8) is subject to abrasion and will be replaced.

11. The process according to any of the claims 6 to 10, wherein the force transducer (12.1) comprises a first piezoelectric element (12.12'), which first piezoelectric element (12.12') is oriented to generate electrical polarization charges with maximum sensitivity to the transverse shear component (Kwx); wherein the force transducer (12.1) comprises a second piezoelectric element (12.12''), which second piezoelectric element (12. 12'') is oriented to generate electrical polarization charges with maximum sensitivity to the vertical shear component (Kwz); and wherein the force transducer (12.1) comprises a third piezoelectric element (12.12'''), which third piezoelectric element (12.12''' ) is oriented to generate electrical polarization charges with maximum sensitivity to the horizontal force component (Kwy).

12. A process for calibrating a force transducer (12.1, 12.2) of a cutting machine (1) according to any of the claims 1 to 3 by using a calibration force transducer (22), wherein in a first process step (210) a machine tool arm (11) of the cutting machine (1) is provided, which machine tool arm (11) comprises a required tool (14.1 - 14.8) and at least one force transducer (12.1, 12.2), wherein said required tool (14.1 - 14.8) is arranged in a position (i) relative to the force transducer (12.1, 12.2); wherein in a further process step (230) a calibration force (Kk) is applied to the required tool (14.1 - 14.8); wherein in a further process step (240) the calibration force (Kk) is measured by the force transducer (12.1, 12.2) and by the calibration force transducer (22); wherein the force transducer (12.1, 12. 2) generates analog measurement signals ($Sa_1$, $Sa_2$) for the calibration force (Kk) measured; wherein the calibration force transducer (22) generates analog calibration signals (Ka) for the calibration force (Kk) measured; wherein analog measurement signals ($Sa_1$, $Sa_2$) are converted in digital measurement signals ($Sd_1$, $Sd_2$); analog calibration signals (Ka) are converted in digital calibration signals (Kd); and wherein in a further process step (260) a comparison of digital measurement signals ($Sd_1$, $Sd_2$) and digital calibration signals (Kd) is carried out, wherein a result of said comparison is a calibration factor ($\alpha_i$) that is specific for the position (i) of the required tool (14.1 - 14.8) relative to the force transducer (12.1, 12.2).

**Revendications**

1. Machine d'usinage (1) pour l'usinage par enlèvement de copeaux d'une pièce à usiner (9), ledit usinage par enlèvement de copeaux étant effectué dans une séquence chronologique d'étapes de fabrication à l'aide d'une pluralité d'outils requis (14.1 - 14.8) ; comprenant un porte-outil (13) pour porter simultanément lesdits outils requis (14.1 - 14.8) ; comprenant un bras d'outil (11) pour fixer ledit porte-outil (13) à une unité d'entraînement (10) ; et dans laquelle ladite unité d'entraînement (10) déplace le bras d'outil (11), lequel déplacement du bras d'outil (11) fait aligner, à chaque étape de fabrication, l'un des outils requis (14) avec une pièce à usiner (9), dans laquelle ledit bras d'outil (11) comprend un bras supérieur (11.1) et un bras inférieur (11.2), dans laquelle le bras supérieur (11.1) et le bras inférieur (11.2) sont des unités séparées et reliées mécaniquement l'une à l'autre par un moyen de connexion (15) ; dans laquelle le bras supérieur (11.1) est fixé à l'unité d'entraînement (10) ; dans laquelle le bras inférieur (11.2) est fixé au porte-outil (13) ; dans laquelle au moins un capteur de force (12.1, 12.2) est disposé dans une position entre le bras supérieur (11.1) et le bras inférieur (11.2), lequel capteur de force (12.1, 12.2) est capable de mesurer une force d'outil (Kw) exercée par l'un des outils requis (14.1 - 14.8) dans le chemin de transfert de force principal pendant l'usinage par enlèvement de copeaux d'une pièce à usiner (9) ; et dans laquelle, avec la connexion mécanique du bras supérieur (11.1) au bras inférieur (11.2), ledit moyen de connexion (15) en outre précharge mécaniquement le transducteur de force (12.1, 12.2).

2. Machine d'usinage (1) selon la revendication 1, dans laquelle le porte-outil (13) est constitué d'un matériau avec un module d'élasticité élevé, supérieur à 200GPa.

3. Machine d'usinage (1) selon l'une quelconque des revendications 1 ou 2, dans laquelle le bras porte-outil (11) est constitué d'un matériau avec un module d'élasticité élevé, supérieur à 200GPa.

4. Utilisation d'un bras d'outil (11) dans une machine d'usinage (1) pour l'usinage par enlèvement de copeaux d'une pièce à usiner (9), lequel usinage par enlèvement de copeaux est effectué dans une séquence chronologique d'étapes de fabrication à l'aide d'une pluralité d'outils requis (14.1 - 14.8) ; comprenant un porte-outil (13) pour porter simultanément les outils requis (14.1 - 14.8) ; lequel bras d'outil (11) fixe le porte-outil (13) à une unité d'entraînement (10) ; et ladite unité d'entraînement (10) déplace le bras d'outil (11), lequel déplacement du bras d'outil (11) fait aligner, à chaque étape de fabrication, l'un des outils requis (14) avec une pièce à usiner (9), dans laquelle ledit bras d'outil (11) comprend un bras supérieur (11.1) et un bras inférieur (11.2), ledit bras supérieur (11.1) et ledit bras inférieur (11.2) étant des unités séparées ; dans laquelle le bras supérieur (11.1) et le bras inférieur (11.2) sont reliés l'un à l'autre mécaniquement par un moyen de connexion (15) ; dans laquelle le bras supérieur (11.1) est fixé à l'unité d'entraînement (10) ; dans laquelle le bras inférieur (11.2) est fixé au porte-outil (13) ; dans laquelle au moins un transducteur de force (12.1, 12.2) est disposé dans une position entre le bras supérieur (11.1) et le bras inférieur (11.2), ledit capteur de force (12.1, 12.2) mesure une force d'outil (Kw) exercée par l'un des outils requis (14.1 - 14.8) dans le chemin de transfert de force principal pendant l'usinage par enlèvement de copeaux d'une pièce (9) ; et dans laquelle, avec la connexion mécanique du bras supérieur (11.1) au bras inférieur (11.2), le moyen de connexion (15) en outre précharge mécaniquement le capteur de force (12.1, 12.2) .

5. Procédé de mise en œuvre d'une machine d'usinage (1) selon l'une quelconque des revendications 1 à 3, dans lequel, pour l'usinage par enlèvement de copeaux de la pièce (9), l'un des outils requis (14.1 - 14.8) est aligné avec ladite pièce (9) à chaque étape de fabrication ; et dans lequel une force d'outil (Kw) exercée par l'outil requis (14.1 - 14.8) pendant l'usinage par enlèvement de copeaux de la pièce à usiner (9) est mesurée par le transducteur de force (12.1, 12.2) .

6. Procédé selon la revendication 5 dans lequel, pendant l'usinage par enlèvement de copeaux de la pièce à usiner (9), l'outil requis (14.1 - 14.8) effectue un mouvement de coupe dans le plan transversal (xz) défini par un axe transversal (x) et un axe vertical (z) de sorte que la force de l'outil (Kw) comprend une composante de cisaillement transversale (Kwx) dans la direction de l'axe transversal (x) et une composante de cisaillement verticale (Kwz) dans la direction de l'axe vertical (z) ; dans lequel, pendant l'usinage par enlèvement de copeaux de la pièce à usiner (9), l'outil requis (14.1 - 14.8) effectue un mouvement d'avance en direction d'un axe horizontal (y) de sorte que la force de l'outil (Kw) comprend une composante de force horizontale (Kwy) en direction de l'axe horizontal (y) ; et dans lequel, pour chaque force de l'outil (Kw) mesurée au cours d'une étape de fabrication, le capteur de force (12.1, 12.2) génère des signaux de mesure analogiques ($Sa_1$, $Sa_2$).

7. Procédé selon la revendication 6, dans lequel lesdits signaux de mesure analogiques ($Sa_1$, $Sa_2$) mesurés par le transducteur de force (12.1, 12.2) comprennent des signaux analogiques de cisaillement transversal ($Sa_1'$, $Sa_2'$)

pour la composante de cisaillement transversal (Kwx) dans la direction de l'axe transversal (x), des signaux analogiques de cisaillement vertical (Sa$_2$", Sa$_2$") pour une composante de cisaillement vertical (Kwz) dans la direction de l'axe vertical (z) et des signaux analogiques de force horizontale (Sa$_2$''', Sa$_2$''') pour une composante de force horizontale (Kwy) dans la direction de l'axe horizontal (y).

8. Procédé selon la revendication 6, dans lequel la machine d'usinage (1) comprend au moins une unité de convertisseur (16.1), laquelle unité de convertisseur (16.1) convertit pour chaque étape de fabrication réalisée avec un outil requis (14.1 - 14.8) les signaux de mesure analogiques (Sa$_1$) en signaux de mesure numériques (Sd$_1$).

9. Procédé selon la revendication 8, dans lequel la machine d'usinage (1) comprend au moins un ordinateur (16.2), lequel ordinateur (16.2) lit lesdits signaux de mesure numériques (Sd$_2$, Sd$_2$) pour chaque étape de fabrication ; dans lequel au moins un signal de référence (R) pour un matériau de la pièce à usiner (9) et pour un matériau de coupe d'un outil requis (14.1 - 14.8) est stocké dans ledit ordinateur (16.2), lequel signal de référence (R) est lu pour chaque étape de fabrication ; dans lequel au moins un facteur d'étalonnage spécifique ($\alpha_i$) pour une position (i) d'un outil requis (14.1 - 14.8) par rapport au capteur de force (12.1, 12.2) est stocké dans ledit ordinateur (16.2), ledit facteur d'étalonnage ($\alpha_i$) étant lu pour chaque étape de fabrication ; dans lequel les signaux de mesure numériques (Sd$_1$) lus pour chaque étape de fabrication sont étalonnés en les multipliant par ledit facteur d'étalonnage ($\alpha_i$) lu ; et dans lequel pour chaque étape de fabrication, une différence ($\Delta$) entre les signaux de mesure numériques (Sd$_1$) étalonnés et le signal de référence (R) lu est calculée.

10. Procédé selon la revendication 9 dans lequel au moins une valeur de tolérance prédéfinie (T) est stockée dans ledit ordinateur (16.2), laquelle valeur de tolérance prédéfinie (T) est lue pour chaque étape de fabrication ; dans lequel pour chaque étape de fabrication, la différence ($\Delta$) est comparée à la valeur de tolérance prédéfinie (T) ; et si la différence ($\Delta$) est inférieure/égale à la valeur de tolérance prédéfinie (T), l'outil requis (14.1 - 14.8) n'est pas usé et continue à être utilisé ; et si la différence ($\Delta$) est supérieure à la valeur de tolérance prédéfinie (T), l'outil requis (14.1 - 14.8) est usé et est remplacé.

11. Procédé selon l'une des revendications 6 à 10 dans lequel le transducteur de force (12.1) comprend un premier élément piézo (12.12'), lequel premier élément piézo (12.12') est orienté de manière à générer des charges électriques de polarisation avec une sensibilité maximale pour la composante de cisaillement transversal (Kwx) ; dans lequel le transducteur de force (12.1) comprend un deuxième élément piézo (12.12''), lequel deuxième élément piézo (12.12'') est orienté de manière à générer des charges électriques de polarisation avec une sensibilité maximale pour la composante de cisaillement vertical (Kwz) ; et dans lequel le transducteur de force (12.1) comprend un troisième élément piézo (12.12'''), lequel troisième élément piézo (12.12''') est orienté de manière à générer des charges électriques de polarisation avec une sensibilité maximale pour la composante de force horizontale (Kwy).

12. Procédé d'étalonnage d'un capteur de force (12.1, 12.2) d'une machine d'usinage (1) selon l'une quelconque des revendications 1 à 3, utilisant un capteur de force d'étalonnage (22), dans lequel, lors d'une première étape du procédé (210), un bras de machine-outil (11) de la machine d'usinage (1) est fourni, lequel bras de machine-outil (11) comprend un outil requis (14.1 - 14.8) et au moins un capteur de force (12.1, 12.2), lequel outil requis (14.1 - 14.8) est disposé dans une position (i) par rapport au capteur de force (12.1, 12.2) ; dans lequel, dans une autre étape du procédé (230), une force d'étalonnage (Kk) est appliquée à l'outil requis (14.1 - 14.8) ; en ce que dans une autre étape du procédé (240), la force d'étalonnage (Kk) est mesurée par le capteur de force (12.1, 12.2) et par le capteur de force d'étalonnage (22) ; dans lequel des signaux de mesure analogiques (Sa$_1$, Sa$_2$) sont générés pour la force d'étalonnage (Kk) mesurée par le capteur de force (12.1, 12.2) ; dans lequel des signaux d'étalonnage analogiques (Ka) sont générés pour la force d'étalonnage (Kk) mesurée par le capteur de force d'étalonnage (22) ; dans lequel les signaux de mesure analogiques (Sa$_1$, Sa$_2$) sont convertis en signaux de mesure numériques (Sd$_1$, Sd$_2$) ; dans lequel les signaux d'étalonnage analogiques (Ka) sont convertis en signaux d'étalonnage numériques (Kd) ; et dans lequel dans une autre étape du procédé (260), les signaux de mesure numériques (Sd$_1$, Sd$_2$) et les signaux d'étalonnage numériques (Kd) sont comparés, dans lequel le résultat de cette comparaison est un facteur d'étalonnage ($\alpha_i$) spécifique pour la position (i) de l'outil requis (14.1 - 14.8) par rapport au transducteur de force (12.1, 12.2).

Fig. 1

$$\alpha_i * Sd_1 - R = \Delta \leq T$$
$$\alpha_i' * Sd_1' - R' = \Delta' \leq T'$$
$$\alpha_i'' * Sd_1'' - R'' = \Delta'' \leq T''$$
$$\alpha_i''' * Sd_1''' - R''' = \Delta''' \leq T'''$$

EP 4 058 236 B1

Fig. 2

Fig. 3

Fig. 4

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- EP 0433535 A1
- EP 0444657 A1

- JP S60172446 A